# EUROPÄISCHE PATENTANMELDUNG

(11) **EP 4 840 595 A1**
(43) Veröffentlichungstag der Anmeldung: **18.11.2026**
(21) Anmeldenummer: 25215899.3
(22) Anmeldetag: 14.11.2025
(51) Int. Cl.: B25J 15/00, B25J 17/02

(54) **GELENK FÜR EINEN ROBOTER, ROBOTERFINGER, ROBOTERHAND UND ROBOTER**

(71) Anmelder: Agile Robots SE, 81369 München (DE)
(72) Erfinder: Dürr, Daniel, 81476 München (DE)
(74) Vertreter: Cohausz & Florack

(57) **Zusammenfassung**

Die Offenbarung betrifft unter anderem ein Gelenk (14, 15) für einen Roboter. Die Aufgabe, ein Gelenk zur Verfügung zu stellen, welches bezüglich einer Drehung um eine zweite Achse einen möglichst großen Drehwinkel bei gleichzeitig kompakter Bauweise ermöglicht, wird gemäß eines ersten Aspekts gelöst durch ein Gelenk (14, 15) für einen Roboter, wobei das Gelenk (14, 15) um eine erste Achse (24a, 25a) und um eine zweite Achse (24b, 25b) drehbar gelagert ist, wobei das Gelenk (14, 15) als Kegelgetriebe ausgebildet ist, welches ein erstes Kegelrad (31), ein zweites Kegelrad (32), ein drittes Kegelrad (33) und ein viertes Kegelrad (34) umfasst, wobei das erste Kegelrad (31) und das zweite Kegelrad (32) gegenüberliegend entlang der ersten Achse (24a, 25a) angeordnet und um die erste Achse (24a, 25a) drehbar gelagert sind, wobei das dritte Kegelrad (33) und das vierte Kegelrad (34) gegenüberliegend entlang der zweiten Achse (24b, 25b) angeordnet und um die zweite Achse (24b, 25b) drehbar gelagert sind, wobei das Gelenk (14, 15) ein Verbindungselement (40) umfasst, welches das dritte Kegelrad (33) und das vierte Kegelrad (34) zumindest teilweise umschließt, wobei das Verbindungselement (40) mit dem dritten Kegelrad (33) fest verbunden und gegenüber dem vierten Kegelrad (34) drehbar gelagert ist, wobei das Verbindungselement (40) eine erste Aussparung (45) aufweist, welche dazu eingerichtet ist, zumindest einen Teil des ersten Kegelrads (31) und/oder zumindest einen Teil eines ersten Antriebsübertragungselements (73) des Gelenks (14, 15) aufzunehmen, wenn das Verbindungselement (40) in Richtung des ersten Kegelrads (31) um die zweite Achse (24b, 25b) gedreht wird, wobei eine Form der ersten Aussparung (45) an eine Form des ersten Kegelrads (31) und/oder an eine Form des ersten Antriebsübertragungselements (73) angepasst ist.

## Beschreibung

Die vorliegende Offenbarung betrifft ein Gelenk für einen Roboter, einen Roboterfinger, eine Roboterhand und einen Roboter.

Roboterhände stellen einen entscheidenden Fortschritt in der Robotik dar und ermöglichen komplexe Manipulationsaufgaben in der Industrie, Medizin und im Dienstleistungsbereich. Bei früheren Entwürfen (z.B. Stanford/JPL, DLR-Hände) sind Aktuatoren oft weit entfernt im Unterarm positioniert und treiben die Finger über Sehnen oder Gestänge an. Dieser Ansatz bringt erhebliche Nachteile mit sich, wie z.B. Energieübertragungsverluste, Steuerungshysterese und verminderte strukturelle Integrität aufgrund unregelmäßiger Kraftwege.

Daher konzentrieren sich die Entwicklungen auf integrierte Direktantriebssysteme, bei denen Antriebe (z.B. Motoren), Sensoren und Elektronik unmittelbar in die Handstruktur eingebettet werden, um die Übertragungsstrecke zu minimieren. Derart integrierte Konstruktionen verfügen bauartbedingt über dicht nebeneinander gepackte Antriebe, wie z.B. in CN 110 450 180 B erwähnt. Diese dicht gepackte Ausnutzung des verfügbaren Bauraums durch die Antriebe bringt jedoch Nachteile hinsichtlich der maximalen Freiheitsgrade und Bewegungswinkel derartiger Roboterfinger mit sich.

Aus dem Stand der Technik sind beispielsweise MCP-Gelenke mit integrierten Direktantriebssystemen bekannt. Die Abkürzung MCP-Gelenk steht dabei für Metacarpophalangeal-Gelenk. Das MCP-Gelenk dient als Grundgelenk in Roboterfingern und ermöglicht Streck- und/oder Beugebewegungen (Flexion und/oder Extension) sowie Spreizbewegungen (Abduktion und/oder Adduktion) des Roboterfingers.

Wenn nachfolgend von Beugung, Beugen oder Beugebewegungen die Rede ist, sind damit Streck- und/oder Beugebewegungen (Flexion und/oder Extension) umfasst. Wenn nachfolgend von Spreizung, Spreizen oder Spreizbewegungen die Rede ist, sind damit Abspreiz- und/oder Anspreizbewegungen (Abduktion und/oder Adduktion) umfasst. Außerdem umfasst der Begriff Spreizwinkel sowohl den Drehwinkel in Abduktionsrichtung als auch den Drehwinkel in Adduktionsrichtung.

Diese zwei Freiheitsgrade eines MCP-Gelenks, nämlich Beugung und Spreizung, ermöglichen eine natürliche Bewegung des Roboterfingers für komplexe Manipulationen. Aus der CN 100 496 903 C sind hierzu zwei Antriebe (Motoren) bekannt, die mit einem Kegelgetriebe (Kegelraddifferential) zusammenwirken, um den Finger zu beugen und/oder zu spreizen. Wenn sich beide Motoren in dieselbe Richtung drehen, führt der Roboterfinger eine Beugebewegung durch. Wenn sich beide Motoren in entgegengesetzte Richtungen drehen, führt der Roboterfinger eine Spreizbewegung durch. Ferner ist aus der CN 100 496 903 C ein Verbindungselement bekannt, welches zwei gegenüberliegende Kegelräder umgreift, und welches für die Ausführung der Spreizbewegung um eine entsprechende Spreizachse gekippt wird. Die beiden genannten gegenüberliegenden Kegelräder sind dabei entlang der Spreizachse angeordnet.

Ein solches Verbindungselement kann jedoch zu einer unerwünschten Limitierung des maximal möglichen Spreizwinkels führen. Insbesondere kann ein aus dem Stand der Technik bekanntes Verbindungselement beim Ausführen einer Spreizbewegung an den beiden weiteren Kegelrädern, die entlang der Beugeachse angeordnet sind, anstoßen.

Darüber hinaus ist aus der DE 10 2008 023 926 B4 ein Abdeckbügel bekannt, welcher ebenfalls die beiden entlang der Spreizachse angeordneten Kegelräder umgreift. Ein solcher Abdeckbügel kann Kräfte aufnehmen und somit die Gefahr eines Auseinanderdrückens der Kegelräder bei hohen Kräften verringern. Daneben kann der Abdeckbügel auch die Gefahr des Eindringens von Verschmutzungen in das Kegelgetriebe reduzieren. Nachteilig ist jedoch, dass auch der Abdeckbügel zu einer unerwünschten Limitierung des maximal möglichen Spreizwinkels führen kann, da beispielsweise das oben beschriebene Verbindungselement an dem Abdeckbügel anstoßen kann.

Das hier beschriebene Problem einer Limitierung des maximal möglichen Spreizwinkels ist insbesondere im Zusammenhang mit einem Grundgelenk eines Daumens einer Roboterhand relevant. Für ein solches Grundgelenk eines Daumens bestehen besonders hohe Anforderungen hinsichtlich der maximalen Freiheitsgrade und Bewegungswinkel, sodass eine Limitierung des maximal möglichen Spreizwinkels hier besonders unerwünscht ist. Grundsätzlich ist das Problem einer Limitierung des maximal möglichen Spreizwinkels jedoch bei allen Arten von Fingergelenken einer Roboterhand relevant.

Ferner ist das hier beschriebene Problem einer Limitierung des maximal möglichen Drehwinkels eines Robotergelenks nicht nur im Zusammenhang mit Fingergelenken und nicht nur im Zusammenhang mit Spreizbewegungen relevant. Vielmehr gibt es eine Vielzahl von Robotergelenken, die bei geringem verfügbarem Bauraum eine Bewegung um zwei Drehachsen ermöglichen müssen und hierzu als Kegelgetriebe ausgestaltet sind. In diesem Zusammenhang tritt regelmäßig das Problem auf, dass eine Vergrößerung des maximal möglichen Drehwinkels in zumindest einer der beiden Drehrichtungen erwünscht ist.

Vor diesem Hintergrund liegt der vorliegenden Offenbarung die Aufgabe zugrunde, ein Gelenk für einen Roboter zur Verfügung zu stellen, welches bezüglich einer Drehung um eine zweite Achse einen möglichst großen Drehwinkel bei gleichzeitig kompakter Bauweise ermöglicht. Ferner liegt der Offenbarung die Aufgabe zugrunde, einen entsprechenden Roboterfinger, eine entsprechende Roboterhand sowie einen entsprechenden Roboter zur Verfügung zu stellen.

In einem ersten Aspekt wird ein Gelenk für einen Roboter offenbart, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um die erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist. Gemäß des ersten Aspekts wird die eingangs genannte Aufgabe für ein solches Gelenk dadurch gelöst, dass das Verbindungselement eine erste Aussparung aufweist, welche dazu eingerichtet ist, zumindest einen Teil des ersten Kegelrads und/oder zumindest einen Teil eines ersten Antriebsübertragungselements des Gelenks aufzunehmen, wenn das Verbindungselement in Richtung des ersten Kegelrads um die zweite Achse gedreht wird, wobei eine Form der ersten Aussparung an eine Form des ersten Kegelrads und/oder an eine Form des ersten Antriebsübertragungselements angepasst ist.

Eine Roboterhand im Sinne dieser Offenbarung kann als ein Greifer verstanden werden. Ein Greifer kann zumindest zwei Finger aufweisen. Ein Beispiel für einen Greifer kann ein paralleler Greifer sein, der aus zwei gegenüberliegenden Fingern gebildet ist. Diese Finger können individuell oder parallel zueinander ansteuerbar und/oder bewegbar sein. Ein Beispiel für einen Greifer kann ein Scherengreifer sein, bei dem sich zwei Finger scherenartig gegeneinander bewegen können. Ein Beispiel für einen Greifer kann ein Mehrfingergreifer sein, der drei oder mehr Finger aufweist. Die Finger können individuell ansteuerbar und/oder bewegbar sein. Ein weiteres Beispiel für einen handähnlichen Greifer ist ein anthropomorpher Roboterhandgreifer. Ein Greifer kann fünf Finger aufweisen, ähnlich wie eine menschliche Hand. Einer der fünf Finger kann ein Daumen sein.

Ein Gelenk im Sinne dieser Offenbarung ist um mindestens zwei Achsen drehbar gelagert. Die entsprechenden Drehachsen werden als erste Achse und zweite Achse bezeichnet. Je nach Ausgestaltung des Gelenks sind dabei verschiedene Konfigurationen möglich. Beispielsweise kann die erste Achse eine Beugeachse (Extensions-/Flexionsachse) und die zweite Achse eine Spreizachse (Abduktions-/Adduktionsachse) sein. Alternativ kann jedoch auch die erste Achse eine Spreizachse (Abduktions-/Adduktionsachse) und die zweite Achse eine Beugeachse (Extensions-/Flexionsachse) sein. Bevorzugt verlaufen die erste Achse und die zweite Achse senkrecht zueinander.

Bei dem Gelenk kann es sich grundsätzlich um ein beliebiges Gelenk für einen Roboter handeln. Beispielsweise ist das Gelenk ein Fingergelenk oder ein Handgelenk, insbesondere ein Fingergelenk oder ein Handgelenk für eine anthropomorphe Roboterhand. Denkbar sind jedoch auch andere Gelenke wie etwa ein Sprunggelenk für einen humanoiden Roboter oder ein Gelenk für einen Industrieroboter oder einen Leichtbauroboter.

Falls das Gelenk ein Fingergelenk ist, kann das Fingergelenk mit zumindest einem Fingerglied mechanisch verbunden sein. Ein Fingerglied kann als ein mechanisches Bauteil verstanden werden, das einen Abschnitt eines künstlichen Fingers nachbildet. Bevorzugt kann das Fingerglied strukturell, funktional und/oder geometrisch an das menschliche Vorbild angelehnt sein. Das Fingerglied kann ein starres oder zumindest teilweise flexibles Bauteil sein.

Das Fingerglied kann durch das Fingergelenk um die zumindest zwei Achsen relativ zu der Roboterhand drehbar gelagert sein. Das Fingerglied kann über das Fingergelenk bevorzugt mit einer Handbasisstruktur oder Handfläche der Roboterhand verbunden sein. Das Fingerglied kann über das Fingergelenk relativ zu der Handbasisstruktur oder Handfläche beweglich sein.

Falls das Gelenk ein anderes Gelenk als ein Fingergelenk ist, kann das Gelenk ebenfalls mit mechanischen Bauteilen eines Roboters wie etwa einer Hand, einem Arm oder einem Teil eines Arms mechanisch verbunden sein, wobei die mechanischen Bauteile des Roboters durch das Gelenk um die zumindest zwei Achsen relativ zueinander drehbar gelagert sein können.

Das Gelenk im Sinne dieser Offenbarung ist als Kegelgetriebe ausgebildet, welches ein erstes Kegelrad, ein zweites Kegelrad, ein drittes Kegelrad und ein viertes Kegelrad umfasst. Das erste Kegelrad und das zweite Kegelrad sind gegenüberliegend entlang der ersten Achse angeordnet und um die erste Achse drehbar gelagert. Das dritte Kegelrad und das vierte Kegelrad sind gegenüberliegend entlang der zweiten Achse angeordnet und um die zweite Achse drehbar gelagert. Jedes der vier Kegelräder greift jeweils in die beiden benachbart angeordneten Kegelräder. Mit dem hier beschriebenen Aufbau des Kegelgetriebes kann zusammen mit der drehbaren Lagerung des Kegelgetriebes erreicht werden, dass das Gelenk einerseits eine Drehbewegung um die erste Achse und andererseits eine Drehbewegung um die zweite Achse ausführen kann, wie nachfolgend noch näher beschrieben wird. Beispielsweise kann die Drehbewegung um die erste Achse eine Beugebewegung und die Drehbewegung um die zweite Achse eine Spreizbewegung sein. Alternativ kann die Drehbewegung um die erste Achse eine Spreizbewegung und die Drehbewegung um die zweite Achse eine Beugebewegung sein.

Ferner umfasst das Gelenk ein Verbindungselement, welches das dritte Kegelrad und das vierte Kegelrad zumindest teilweise umschließt. Das Verbindungselement ist mit dem dritten Kegelrad fest verbunden und gegenüber dem vierten Kegelrad drehbar gelagert. Mit einem solchen Verbindungselement kann zusammen mit dem beschriebenen Aufbau des Kegelgetriebes und zusammen mit der drehbaren Lagerung des Kegelgetriebes ein Mechanismus erreicht werden, bei dem das Gelenk eine Drehbewegung um die erste Achse ausführt, wenn das erste und zweite Kegelrad gleichsinnig angetrieben werden, und eine Drehbewegung um die zweite Achse ausführt, wenn das erste und zweite Kegelrad gegenläufig angetrieben werden.

Außerdem kann das Verbindungselement zur Befestigung eines mechanischen Bauteils wie etwa eines distal angeordneten Fingerglieds dienen. Ferner kann mit einem Verbindungselement erreicht werden, dass das Kegelgetriebe zusammengehalten wird.

Als erstes und zweites Kegelrad im Sinne dieser Offenbarung werden die beiden Kegelräder bezeichnet, die entlang der ersten Achse angeordnet und um die erste Achse drehbar gelagert sind. Als drittes Kegelrad wird das Kegelrad bezeichnet, das entlang der zweiten Achse angeordnet, um die zweite Achse drehbar gelagert, und fest mit dem Verbindungselement verbunden ist. Als viertes Kegelrad wird das Kegelrad bezeichnet, das entlang der zweiten Achse angeordnet, um die zweite Achse drehbar gelagert, und gegenüber dem Verbindungselement drehbar gelagert ist. Beispielsweise kann die erste Achse eine Beugeachse und die zweite Achse eine Spreizachse sein. Alternativ kann die erste Achse eine Spreizachse und die zweite Achse eine Beugeachse sein.

Unter einem ersten Antriebsübertragungselement im Sinne dieser Offenbarung kann ein Element des Gelenks verstanden werden, welches eine Bewegung eines ersten Antriebs zumindest mittelbar auf das erste Kegelrad überträgt. Hierzu kann das erste Antriebsübertragungselement mit dem ersten Antrieb mechanisch gekoppelt sein. Die mechanische Kopplung zwischen dem ersten Antriebsübertragungselement und dem ersten Antrieb kann beispielsweise mittels einer Zahnradanordnung oder mittels eines Antriebsriemens erfolgen. Ferner kann das erste Antriebsübertragungselement mit dem ersten Kegelrad mechanisch gekoppelt sein. Die mechanische Kopplung zwischen dem ersten Antriebsübertragungselement und dem ersten Kegelrad kann beispielsweise dadurch erfolgen, dass das erste Antriebsübertragungselement mit dem ersten Kegelrad fest verbunden ist. Beispielsweise kann es sich bei dem ersten Antriebsübertragungselement um ein erstes Stirnzahnrad handeln, welches mechanisch mit einem Getriebe und/oder einem Motor des ersten Antriebs gekoppelt ist und fest mit dem ersten Kegelrad verbunden ist.

Zur Lösung der eingangs genannten Aufgabe wird gemäß des ersten Aspekts vorgeschlagen, dass das Verbindungselement eine erste Aussparung aufweist, welche dazu eingerichtet ist, zumindest einen Teil des ersten Kegelrads und/oder zumindest einen Teil des ersten Antriebsübertragungselements aufzunehmen, wenn das Verbindungselement in Richtung des ersten Kegelrads um die zweite Achse gedreht wird, wobei eine Form der ersten Aussparung an eine Form des ersten Kegelrads und/oder an eine Form des ersten Antriebsübertragungselements angepasst ist. Unter einer angepassten Form der ersten Aussparung wird eine Form verstanden, die einer Form des ersten Kegelrads und/oder einer Form des ersten Antriebsübertragungselements nachgebildet ist, um Raum für das erste Kegelrad und/oder das erste Antriebsübertragungselement zu schaffen. Grundsätzlich muss die Form der ersten Aussparung der Form des ersten Kegelrads und/oder der Form des ersten Antriebsübertragungselements nicht exakt nachgebildet sein, sondern es genügt, wenn die Form der ersten Aussparung an die Form des ersten Kegelrads und/oder an die Form des ersten Antriebsübertragungselements angelehnt ist. Beispielsweise kann die Form der ersten Aussparung mindestens eine Rundung aufweisen, um Raum für das erste Kegelrad und/oder das erste Antriebsübertragungselement zu schaffen. Beispielsweise kann die erste Aussparung taschenförmig sein. Beispielsweise kann die Form der ersten Aussparung konkav sein.

Die Anpassung der Form der ersten Aussparung an die Form des ersten Kegelrads und/oder an die Form des ersten Antriebsübertragungselements kann grundsätzlich von der konkreten Anordnung und Ausgestaltung des Gelenks abhängen. In beispielhaften Ausführungsformen des ersten Aspekts kann die Form der ersten Aussparung nur an die Form des ersten Kegelrads angepasst sein, etwa wenn das Gelenk so ausgestaltet ist, dass das Verbindungselement beim Ausführen einer Drehbewegung um die zweite Achse in Richtung des ersten Kegelrads nicht an dem ersten Antriebsübertragungselement anstößt. In anderen beispielhaften Ausführungsformen des ersten Aspekts kann die Form der ersten Aussparung nur an die Form des ersten Antriebsübertragungselements angepasst sein, etwa wenn das Gelenk so ausgestaltet ist, dass das Verbindungselement beim Ausführen einer Drehbewegung um die zweite Achse in Richtung des ersten Kegelrads nicht an dem ersten Kegelrad anstößt. In anderen beispielhaften Ausführungsformen des ersten Aspekts kann die Form der ersten Aussparung an die Form des ersten Kegelrads und an die Form des ersten Antriebsübertragungselements angepasst sein, etwa wenn das Gelenk so ausgestaltet ist, dass das Verbindungselement beim Ausführen einer Drehbewegung um die zweite Achse in Richtung des ersten Kegelrads sowohl an dem ersten Kegelrad als auch an dem ersten Antriebsübertragungselement anstoßen würde, falls die erste Aussparung nicht vorhanden wäre.

Dadurch, dass die Form der ersten Aussparung an eine Form des ersten Kegelrads und/oder an eine Form des ersten Antriebsübertragungselements angepasst ist, kann gegenüber einem Verbindungselement ohne angepasste Aussparung ein größerer Drehwinkel bezüglich einer Drehung um die zweite Achse erreicht werden. Insbesondere kann erreicht werden, dass das Verbindungselement beim Ausführen einer Drehbewegung um die zweite Achse in Richtung des ersten Kegelrads nicht oder erst bei größeren Drehwinkeln an das erste Kegelrad und/oder an das erste Antriebsübertragungselement anstößt. Folglich ist der Drehwinkel weniger limitiert und kann in Richtung des ersten Kegelrads größere Werte annehmen.

In einer bevorzugten Ausführungsform des ersten Aspekts kann die erste Aussparung dazu eingerichtet sein, zumindest einen Teil des ersten Kegelrads und/oder zumindest einen Teil des ersten Antriebsübertragungselements passgenau aufzunehmen, wenn das Verbindungselement in Richtung des ersten Kegelrads um die zweite Achse gedreht wird. Unter einer passgenauen Aufnahme wird verstanden, dass die Form der ersten Aussparung nicht nur ungefähr an die Form des ersten Kegelrads und/oder an die Form des ersten Antriebsübertragungselements angelehnt ist, sondern dass die Form der ersten Aussparung zumindest einem Teil der Form des ersten Kegelrads und/oder zumindest einem Teil der Form des ersten Antriebsübertragungselements entspricht. Beispielsweise kann die Form der ersten Aussparung durch einen Abzugskörper des ersten Kegelrads und/oder durch einen Abzugskörper des ersten Antriebsübertragungselements definiert sein. Hierunter wird verstanden, dass die Form der ersten Aussparung sich dadurch ergibt, dass zumindest ein Teil eines gedachten Hüllkörpers des ersten Kegelrads und/oder zumindest ein Teil eines gedachten Hüllkörpers des ersten Antriebsübertragungselements aus dem Verbindungselement herausgeschnitten werden. Die Hüllkörper können dabei insbesondere vereinfachte geometrische Körper sein, welche das erste Kegelrad beziehungsweise das erste Antriebsübertragungselement umhüllen. Beispielsweise kann der Hüllkörper des ersten Kegelrads ein Kegel oder ein Kegelstumpf sein. Beispielsweise kann der Hüllkörper des ersten Antriebsübertragungselements ein Zylinder sein. Durch die passgenaue Aufnahme kann eine verbesserte Ausnutzung des vorhandenen Raums erreicht werden, sodass der Drehwinkel bezüglich einer Drehung um die zweite Achse letztendlich noch größere Werte annehmen kann.

Selbst im Falle einer passgenauen Aufnahme kann vorgesehen sein, dass das erste Kegelrad und/oder das erste Antriebsübertragungselement nicht an der ersten Aussparung anliegen, d.h. beim maximal möglichen Drehwinkel nicht in Kontakt mit der ersten Aussparung kommen. Ein solcher Kontakt würde nämlich eine Bewegung des ersten Kegelrads und/oder des ersten Antriebsübertragungselements abbremsen und darüber hinaus die Gefahr einer Beschädigung des ersten Kegelrads und/oder des ersten Antriebsübertragungselements mit sich bringen.

Vielmehr kann das Gelenk in Ausführungsformen des ersten Aspekts dazu eingerichtet sein, dass bei einem maximal möglichen Drehwinkel bezüglich einer Drehung um die zweite Achse ein Spalt zwischen der ersten Aussparung einerseits und dem ersten Kegelrad und/oder dem ersten Antriebsübertragungselement andererseits verbleibt. Dies kann beispielsweise dadurch geschehen, dass ein Abzugskörper des ersten Kegelrads und/oder ein Abzugskörper des ersten Antriebsübertragungselements einen Versatz gegenüber der ersten Aussparung aufweisen. Mit anderen Worten werden das erste Kegelrad und/oder das erste Antriebsübertragungselement mit einer Spielpassung von der ersten Aussparung aufgenommen. Der Spalt kann insbesondere eine konstante Dicke aufweisen. Durch den Spalt beziehungsweise die Spielpassung kann erreicht werden, dass ein Toleranzabstand zwischen der ersten Aussparung einerseits und dem ersten Kegelrad und/oder dem ersten Antriebsübertragungselement andererseits bereitgestellt wird, sodass ein nachteiliger Kontakt vermieden werden kann.

Grundsätzlich lässt sich eine Vergrößerung des Drehwinkels bezüglich einer Drehung um die zweite Achse bereits dadurch erreichen, dass das Verbindungselement eine erste Aussparung aufweist, deren Form an die Form des ersten Kegelrads und/oder an die Form des ersten Antriebsübertragungselements angepasst ist. In einer bevorzugten Ausführungsform des ersten Aspekts kann das Verbindungselement jedoch ferner eine zweite Aussparung aufweisen, welche dazu eingerichtet ist, zumindest einen Teil des zweiten Kegelrads und/oder zumindest einen Teil eines zweiten Antriebsübertragungselements des Gelenks aufzunehmen, wenn das Verbindungselement in Richtung des zweiten Kegelrads um die zweite Achse gedreht wird, wobei eine Form der zweiten Aussparung an eine Form des zweiten Kegelrads und/oder an eine Form des zweiten Antriebsübertragungselements angepasst ist. Hierdurch lassen sich in beide Drehrichtungen größere Drehwinkel bezüglich einer Drehung um die zweite Achse erreichen, da das Verbindungselement auch beim Ausführen einer Drehbewegung in Richtung des zweiten Kegelrads nicht oder erst bei größeren Drehwinkeln an das zweite Kegelrad und/oder an das zweite Antriebsübertragungselement anstößt. Die erste Aussparung und die zweite Aussparung können beispielsweise gegenüberliegend angeordnet sein. Ferner kann das Kegelgetriebe in Ausführungsformen des ersten Aspekts zumindest teilweise symmetrisch bezüglich einer Ebene senkrecht zur ersten Achse aufgebaut sein. Beispielsweise kann die Form des ersten Kegelrads der Form des zweiten Kegelrads entsprechen. Alternativ oder zusätzlich kann die Form des ersten Antriebsübertragungselements der Form des zweiten Antriebsübertragungselements entsprechen. Dementsprechend können die erste Aussparung und die zweite Aussparung dieselbe Form aufweisen. Dies gilt insbesondere dann, wenn die beiden Aussparungen gegenüberliegend angeordnet sind.

Sämtliche Ausführungen, die oben im Zusammenhang mit der ersten Aussparung dargelegt wurden, gelten analog auch für die zweite Aussparung.

So kann unter einem zweiten Antriebsübertragungselement im Sinne dieser Offenbarung ein Element des Gelenks verstanden werden, welches eine Bewegung eines zweiten Antriebs zumindest mittelbar auf das zweite Kegelrad überträgt. Hierzu kann das zweite Antriebsübertragungselement mit dem zweiten Antrieb mechanisch gekoppelt sein. Die mechanische Kopplung zwischen dem zweiten Antriebsübertragungselement und dem zweiten Antrieb kann beispielsweise mittels einer Zahnradanordnung oder mittels eines Antriebsriemens erfolgen. Ferner kann das zweite Antriebsübertragungselement mit dem zweiten Kegelrad mechanisch gekoppelt sein. Die mechanische Kopplung zwischen dem zweiten Antriebsübertragungselement und dem zweiten Kegelrad kann beispielsweise dadurch erfolgen, dass das zweite Antriebsübertragungselement mit dem zweiten Kegelrad fest verbunden ist. Beispielsweise kann es sich bei dem zweiten Antriebsübertragungselement um ein zweites Stirnzahnrad handeln, welches mechanisch mit einem Getriebe und/oder einem Motor des zweiten Antriebs gekoppelt ist und fest mit dem zweiten Kegelrad verbunden ist.

Ferner wird unter einer angepassten Form der zweiten Aussparung eine Form verstanden, die einer Form des zweiten Kegelrads und/oder einer Form des zweiten Antriebsübertragungselements nachgebildet ist, um Raum für das zweite Kegelrad und/oder das zweite Antriebsübertragungselement zu schaffen. Grundsätzlich muss die Form der zweiten Aussparung der Form des zweiten Kegelrads und/oder der Form des zweiten Antriebsübertragungselements nicht exakt nachgebildet sein, sondern es genügt, wenn die Form der zweiten Aussparung an die Form des zweiten Kegelrads und/oder an die Form des zweiten Antriebsübertragungselements angelehnt ist. Beispielsweise kann die Form der zweiten Aussparung mindestens eine Rundung aufweisen, um Raum für das zweite Kegelrad und/oder das zweite Antriebsübertragungselement zu schaffen. Beispielsweise kann die zweite Aussparung taschenförmig sein. Beispielsweise kann die Form der zweiten Aussparung konkav sein.

Die Anpassung der Form der zweiten Aussparung an die Form des zweiten Kegelrads und/oder an die Form des zweiten Antriebsübertragungselements kann grundsätzlich von der konkreten Anordnung und Ausgestaltung des Gelenks abhängen. In diesem Zusammenhang wird auf die obenstehenden Ausführungen zur ersten Aussparung Bezug genommen, welche analog auch für die zweite Aussparung gelten.

In einer bevorzugten Ausführungsform des ersten Aspekts kann die zweite Aussparung dazu eingerichtet sein, zumindest einen Teil des zweiten Kegelrads und/oder zumindest einen Teil des zweiten Antriebsübertragungselements passgenau aufzunehmen, wenn das Verbindungselement in Richtung des zweiten Kegelrads um die zweite Achse gedreht wird. In diesem Zusammenhang wird auf die obenstehenden Ausführungen zur ersten Aussparung Bezug genommen, welche analog auch für die zweite Aussparung gelten.

In Ausführungsformen des ersten Aspekts kann das Gelenk dazu eingerichtet sein, dass bei einem maximal möglichen Drehwinkel bezüglich einer Drehung um die zweite Achse ein Spalt zwischen der zweiten Aussparung einerseits und dem zweiten Kegelrad und/oder dem zweiten Antriebsübertragungselement andererseits verbleibt. In diesem Zusammenhang wird auf die obenstehenden Ausführungen zur ersten Aussparung Bezug genommen, welche analog auch für die zweite Aussparung gelten.

In einer weiteren bevorzugten Ausführungsform des ersten Aspekts kann das Verbindungselement einen Bügelabschnitt und einen Basisabschnitt umfassen. Ferner kann der Bügelabschnitt ein Verstärkungselement zur mechanischen Verstärkung des Bügelabschnitts aufweisen. Dabei kann das Verstärkungselement zumindest einen Teil der ersten Aussparung und/oder zumindest einen Teil der zweiten Aussparung aufweisen. Unter einem Bügelabschnitt wird ein Abschnitt des Verbindungselements mit einer gebogenen Grundform verstanden. Der Bügelabschnitt kann ein erstes Ende aufweisen, an dem der Bügelabschnitt mit dem dritten Kegelrad fest verbunden ist. Ferner kann der Bügelabschnitt ein zweites Ende aufweisen, an dem der Bügelabschnitt gegenüber dem vierten Kegelrad drehbar gelagert ist. Der Bügelabschnitt, der Basisabschnitt und das Verstärkungselement können separate und fest verbundene Komponenten des Verbindungselements sein. Alternativ kann das Verbindungselement einstückig ausgebildet sein und einen Bügelabschnitt sowie einen Basisabschnitt mit einem Verstärkungselement umfassen. Aufgrund der räumlichen Gegebenheiten des Kegelgetriebes und des Verbindungselements kann es insbesondere ein Verstärkungselement zur mechanischen Verstärkung des Verbindungselements sein, welches beim Ausführen einer Drehbewegung um die zweite Achse an die Kegelräder und/oder die Antriebsübertragungselemente anstößt und somit den maximalen Drehwinkel begrenzt. Dadurch, dass das Verstärkungselement zumindest einen Teil der ersten Aussparung und/oder zumindest einen Teil der zweiten Aussparung aufweist, kann somit ein größerer Drehwinkel bezüglich einer Drehung um die zweite Achse erreicht werden. Optional umfasst das Verstärkungselement die erste Aussparung und/oder die zweite Aussparung vollständig und nicht nur teilweise.

Unter einem Basisabschnitt wird ein Abschnitt des Verbindungselements mit einer ebenen Grundform verstanden. An dem Basisabschnitt kann ein mechanisches Bauteil wie etwa ein distal angeordnetes Fingerglied befestigt werden. Ferner kann der Basisabschnitt mindestens einen Sensor aufweisen. Insbesondere kann der mindestens eine Sensor auf einer Oberfläche des Basisabschnitts angeordnet oder in den Basisabschnitt integriert sein, etwa indem der mindestens eine Sensor in den Basisabschnitt eingefräst ist. Der mindestens eine Sensor kann beispielsweise einen Lagesensor umfassen. Alternativ oder zusätzlich kann der mindestens eine Sensor einen Kraftsensor umfassen. Der Kraftsensor kann beispielsweise ein 2D-Sensor sein. Unter einem 2D-Sensor wird eine kreuzförmige Anordnung aus zwei Dehnungsmessstreifen verstanden. Insbesondere können die beiden Dehnungsmessstreifen senkrecht zueinander ausgerichtet sein. Aus der jeweiligen Dehnung eines Dehnungsmessstreifens kann eine Kraft ermittelt werden, sodass mit einem 2D-Sensor Kräfte in zwei Richtungen gemessen werden können.

In einer weiteren bevorzugten Ausführungsform des ersten Aspekts kann das Gelenk dazu eingerichtet sein, bei einer Drehung um die zweite Achse einen Drehwinkel von +/- 30° oder mehr, bevorzugt +/- 35° oder mehr, zu ermöglichen. Die angegebenen Drehwinkel lassen sich mit einem Verbindungselement wie hier vorgeschlagen erreichen. Im Stand der Technik ist der maximal mögliche Drehwinkel bezüglich einer Drehung um die zweite Achse hingegen auf ca. 20° limitiert, sodass demgegenüber eine deutliche Verbesserung erzielt werden kann.

In einer weiteren bevorzugten Ausführungsform des ersten Aspekts kann das Gelenk außerdem ein Abdeckelement umfassen, welches das dritte Kegelrad und das vierte Kegelrad zumindest teilweise umschließt. Mit einem solchen Abdeckelement kann die Gefahr eines Auseinanderdrückens der Kegelräder bei hohen Kräften verringert werden, da das Abdeckelement die Kräfte zumindest teilweise aufnehmen kann. Daneben kann das Abdeckelement auch die Gefahr des Eindringens von Verschmutzungen in das Kegelgetriebe reduzieren.

In einer weiteren bevorzugten Ausführungsform des ersten Aspekts kann das Abdeckelement das Verbindungselement zumindest teilweise umschließen, d.h. zumindest Teile des Abdeckelements können außerhalb von Teilen des Verbindungselements oder um Teile des Verbindungselements herum angeordnet sein. Beispielsweise kann das Abdeckelement den Bügelabschnitt des Verbindungselements zumindest teilweise umschließen, d.h. zumindest Teile des Abdeckelements können außerhalb von Teilen des Bügelabschnitts oder um Teile des Bügelabschnitts herum angeordnet sein.

Das Abdeckelement kann insbesondere gemäß der nachfolgend noch beschriebenen Ausführungsformen des zweiten und dritten Aspekts ausgestaltet sein.

In einem zweiten Aspekt wird ein Gelenk für einen Roboter offenbart, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um die erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist, wobei das Gelenk ferner ein Abdeckelement umfasst, welches das dritte Kegelrad und das vierte Kegelrad zumindest teilweise umschließt, wobei das Abdeckelement das Verbindungselement zumindest teilweise umschließt. Gemäß des zweiten Aspekts wird die eingangs genannte Aufgabe für ein solches Gelenk dadurch gelöst, dass das Abdeckelement entlang einer Umfangsrichtung einen variablen Krümmungsradius aufweist.

Mit dem entlang der Umfangsrichtung variablen Krümmungsradius des Abdeckelements kann neben einer Vergrößerung des Drehwinkels bezüglich einer Drehung um die zweite Achse eine bessere Ausnutzung des vorhandenen Bauraums erreicht werden. Beispielsweise kann der variable Krümmungsradius so ausgestaltet sein, dass das Verbindungselement beim Ausführen einer Drehbewegung um die zweite Achse nicht oder erst bei größeren Drehwinkeln an dem Abdeckelement anstößt. Folglich ist der Drehwinkel weniger limitiert und kann größere Werte annehmen.

In einer bevorzugten Ausführungsform des zweiten Aspekts kann das Abdeckelement einen ersten Bereich mit einem ersten Krümmungsradius und einen zweiten Bereich mit einem zweiten Krümmungsradius, der sich vom ersten Krümmungsradius unterscheidet, aufweisen. Hierdurch kann ein Abdeckelement mit variablem Krümmungsradius realisiert werden, welches vergleichsweise einfach herzustellen ist.

Beispielsweise kann der erste Krümmungsradius zwischen 9 mm und 11 mm und der zweite Krümmungsradius zwischen 12 mm und 14 mm liegen. Grundsätzlich kann das Abdeckelement weitere Bereiche mit jeweils unterschiedlichen Krümmungsradien aufweisen, beispielsweise einen dritten Bereich, einen vierten Bereich, einen fünften Bereich, usw. Wenn das Abdeckelement drei oder mehr Bereiche aufweist, können zwei nicht benachbarte Bereiche auch denselben Krümmungsradius aufweisen. Beispielsweise können ein erster und ein dritter Bereich denselben Krümmungsradius aufweisen, der sich jedoch vom Krümmungsradius eines dazwischenliegenden zweiten Bereichs unterscheidet.

In einer weiteren bevorzugten Ausführungsform des zweiten Aspekts kann das Abdeckelement einen Bogenabschnitt und mindestens einen seitlich vom Bogenabschnitt angeordneten und mit dem Bogenabschnitt verbundenen Blendenabschnitt umfassen. Der Bogenabschnitt und der mindestens eine Blendenabschnitt können separate und fest verbundene Komponenten des Abdeckelements sein. Alternativ kann das Abdeckelement einstückig ausgebildet sein und einen Bogenabschnitt sowie mindestens einen Blendenabschnitt umfassen. Beispielsweise kann das Abdeckelement zwei auf gegenüberliegenden Seiten des Bogenabschnitts angeordnete und mit dem Bogenabschnitt verbundene Blendenabschnitte umfassen. Durch den mindestens einen Blendenabschnitt kann die mechanische Stabilität des Abdeckelements erhöht werden. Ferner kann die Gefahr des Eindringens von Verschmutzungen in das Kegelgetriebe insbesondere aus seitlicher Richtung reduziert werden.

Der Bogenabschnitt kann entlang einer Umfangsrichtung, welche der Umfangsrichtung des Abdeckelements entspricht, einen variablen Krümmungsradius aufweisen und dadurch den variablen Krümmungsradius des Abdeckelements definieren. Der mindestens eine Blendenabschnitt kann insbesondere gemäß der nachfolgend noch beschriebenen Ausführungsformen des dritten Aspekts ausgestaltet sein.

In einem dritten Aspekt wird ein Gelenk für einen Roboter offenbart, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um die erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist, wobei das Gelenk ferner ein Abdeckelement umfasst, welches das dritte Kegelrad und das vierte Kegelrad zumindest teilweise umschließt, wobei das Abdeckelement das Verbindungselement zumindest teilweise umschließt, wobei das Abdeckelement einen Bogenabschnitt und mindestens einen seitlich vom Bogenabschnitt angeordneten und mit dem Bogenabschnitt verbundenen Blendenabschnitt umfasst. Gemäß des dritten Aspekts wird die eingangs genannte Aufgabe für ein solches Gelenk dadurch gelöst, dass der mindestens eine Blendenabschnitt jeweils mindestens eine Auskerbung aufweist, welche dazu eingerichtet ist, eine Bewegung des Verbindungselements am jeweiligen Blendenabschnitt vorbei zumindest teilweise zu ermöglichen, wenn das Verbindungselement um die zweite Achse gedreht wird.

Auch hierdurch kann erreicht werden, dass das Verbindungselement beim Ausführen einer Drehbewegung um die zweite Achse nicht oder erst bei größeren Drehwinkeln an dem Abdeckelement anstößt, sodass folglich der Drehwinkel größere Werte annehmen kann.

Beispielsweise kann das Abdeckelement zwei auf gegenüberliegenden Seiten des Bogenabschnitts angeordnete und mit dem Bogenabschnitt verbundene Blendenabschnitte umfassen, wobei beide Blendenabschnitte jeweils mindestens eine entsprechende Auskerbung aufweisen.

Es können Synergieeffekte erzielt werden, wenn Ausführungsformen des ersten, zweiten und/oder dritten Aspekts miteinander kombiniert werden. Beispielsweise können besonders große Drehwinkel bezüglich einer Drehung um die zweite Achse erreicht werden, wenn das Gelenk sowohl ein Verbindungselement gemäß des ersten Aspekts mit einer ersten Aussparung, deren Form an eine Form des ersten Kegelrads und/oder an eine Form des ersten Antriebsübertragungselements angepasst ist, als auch ein Abdeckelement gemäß des zweiten Aspekts mit einem entlang der Umfangsrichtung variablen Krümmungsradius umfasst. Außerdem können besonders große Drehwinkel bezüglich einer Drehung um die zweite Achse beispielsweise erreicht werden, wenn das Gelenk sowohl ein Verbindungselement gemäß des ersten Aspekts mit einer ersten Aussparung, deren Form an eine Form des ersten Kegelrads und/oder an eine Form des ersten Antriebsübertragungselements angepasst ist, als auch ein Abdeckelement gemäß des dritten Aspekts mit jeweils mindestens einer Auskerbung in mindestens einem Blendenabschnitt des Abdeckelements umfasst. Außerdem können besonders große Drehwinkel bezüglich einer Drehung um die zweite Achse beispielsweise erreicht werden, wenn das Gelenk ein Abdeckelement umfasst, welches sowohl gemäß des zweiten Aspekts einen entlang der Umfangsrichtung variablen Krümmungsradius aufweist als auch gemäß des dritten Aspekts mindestens einen Blendenabschnitt mit jeweils mindestens einer Auskerbung umfasst. Schließlich können nochmals größere Drehwinkel bezüglich einer Drehung um die zweite Achse erreicht werden, wenn alle drei der genannten Merkmale kombiniert werden.

In bevorzugten Ausführungsformen aller drei Aspekte kann das Gelenk ein Fingergelenk sein. Insbesondere kann das Gelenk ein Fingergelenk für einen Roboterfinger sein. Unter einem Fingergelenk wird ein Gelenk verstanden, welches entweder zwei Fingerglieder miteinander oder ein Fingerglied mit einer Handbasisstruktur oder Handfläche einer Roboterhand verbindet. Insbesondere in den Fällen, in denen es sich bei dem Gelenk um ein Fingergelenk handelt, kann die erste Achse eine Beugeachse und die zweite Achse eine Spreizachse sein.

Dementsprechend kann eine Drehbewegung um die erste Achse eine Beugebewegung und eine Drehbewegung um die zweite Achse eine Spreizbewegung sein. Ferner kann ein Drehwinkel bezüglich einer Drehung um die erste Achse ein Beugewinkel und ein Drehwinkel bezüglich einer Drehung um die zweite Achse ein Spreizwinkel sein.

In den Fällen, in denen es sich bei dem Gelenk um ein Fingergelenk handelt, kann das Fingergelenk insbesondere ein Fingergrundgelenk sein. Unter einem Fingergrundgelenk wird ein Fingergelenk verstanden, welches ein Fingerglied mit einer Handbasisstruktur oder Handfläche einer Roboterhand verbindet. Ein Beispiel für ein Fingergrundgelenk ist ein MCP-Gelenk einer anthropomorphen Roboterhand. Wie eingangs erwähnt wurde, ist die Problematik der Limitierung des maximal möglichen Drehwinkels bezüglich einer Drehung um die zweite Achse im Zusammenhang mit Fingergrundgelenken wie etwa MCP-Gelenken besonders relevant, sodass hier eine besonders vorteilhafte Verbesserung erreicht werden kann. Dennoch kann ein Fingergelenk in Ausführungsformen aller drei Aspekte auch ein anderes Fingergelenk eines Roboterfinders sein, insbesondere ein Fingergelenk, welches zwei Fingerglieder miteinander verbindet.

In alternativen Ausführungsformen aller drei Aspekte kann das Gelenk ein Handgelenk sein. Unter einem Handgelenk wird ein Gelenk verstanden, welches eine Roboterhand wie etwa einen Greifer mit einer Armstruktur eines Roboters verbindet. Die Roboterhand kann beispielsweise eine anthropomorphe Roboterhand sein. In diesem Fall kann es sich bei der Armstruktur insbesondere um eine Unterarmstruktur handeln. Die Roboterhand kann jedoch auch beispielsweise ein Greifer eines Industrieroboters oder eines Leichtbauroboters sein. Insbesondere in den Fällen, in denen es sich bei dem Gelenk um ein Handgelenk handelt, kann die erste Achse eine Spreizachse und die zweite Achse eine Beugeachse sein. Dementsprechend kann eine Drehbewegung um die erste Achse eine Spreizbewegung und eine Drehbewegung um die zweite Achse eine Beugebewegung sein. Ferner kann ein Drehwinkel bezüglich einer Drehung um die erste Achse ein Spreizwinkel und ein Drehwinkel bezüglich einer Drehung um die zweite Achse ein Beugewinkel sein. Bei einem soeben beschriebenen Handgelenk kann ebenfalls eine unerwünschte Beschränkung des maximal möglichen Drehwinkels bezüglich einer Drehung um die zweite Achse auftreten, wobei die zweite Achse dann insbesondere einer Beugeachse entsprechen kann. Folglich kann im Falle eines solchen Handgelenks ebenfalls eine vorteilhafte Verbesserung erreicht werden.

In weiteren alternativen Ausführungsformen aller drei Aspekte kann das Gelenk ein Gelenk eines Industrieroboters oder eines Leichtbauroboters sein. Insbesondere kann das Gelenk ein zweiachsiges Gelenk sein, welches einen Endeffektor mit einer Armstruktur verbindet. Typischerweise werden die Gelenke eines Industrieroboters oder eines Leichtbauroboters von einer Basis bis zu einem Endeffektor aufsteigend durchnummeriert. Die Anzahl der Gelenke kann beispielsweise sieben betragen, wobei jedes Gelenk einem Freiheitsgrad entsprechen kann. Die beiden letzten Gelenke können abweichend davon jedoch nicht als separate einachsige Gelenke mit jeweils einem Freiheitsgrad, sondern als ein zweiachsiges Gelenk mit zwei Freiheitsgraden ausgestaltet sein. Ein solches Gelenk kann als "Joint-x-y" bezeichnet werden, wobei x die Nummer des vorletzten Freiheitsgrads und y die Nummer des letzten Freiheitsgrads vor dem Endeffektor bezeichnet. Dabei kann eine Parallele zum Handgelenk der menschlichen Hand gezogen werden. Falls der Roboter insgesamt sieben Freiheitsgrade aufweist, ergibt sich für das zweiachsige Gelenk vor dem Endeffektor beispielhaft die Bezeichnung "Joint-6-7". Auch bei Gelenken von Industrierobotern oder Leichtbaurobotern, und insbesondere bei dem genannten "Joint-x-y" oder "Joint-6-7", kann eine unerwünschte Beschränkung des maximal möglichen Drehwinkels bezüglich einer Drehung um die zweite Achse auftreten, sodass auch hier eine vorteilhafte Verbesserung erreicht werden kann.

In allen drei Aspekten werden außerdem entsprechende Roboterfinger mit mindestens einem Gelenk gemäß des jeweiligen Aspekts offenbart. Das mindestens eine Gelenk ist in diesem Zusammenhang insbesondere mindestens ein Fingergelenk. Die Roboterfinger können mindestens ein Fingerglied und/oder mindestens ein weiteres Fingergelenk umfassen.

In bevorzugten Ausführungsformen aller drei Aspekte ist der Roboterfinger ein Daumen, insbesondere ein Daumen einer anthropomorphen Roboterhand. Wie eingangs beschrieben wurde, ist eine Limitierung des maximal möglichen Drehwinkels bezüglich einer Drehung um die zweite Achse im Fall eines Daumens, insbesondere beim Grundgelenk eines Daumens, besonders unerwünscht, sodass hier eine besonders vorteilhafte Verbesserung erreicht werden kann.

In allen drei Aspekten werden außerdem entsprechende Roboterhände mit mindestens einem Gelenk gemäß des jeweiligen Aspekts und/oder mit mindestens einem Roboterfinger gemäß des jeweiligen Aspekts offenbart. Die Roboterhände können anthropomorph sein und beispielsweise eine Handbasisstruktur umfassen, um eine menschliche Hand nachzubilden. Das mindestens eine Gelenk kann in diesem Zusammenhang mindestens ein Fingergelenk und/oder ein Handgelenk sein.

Schließlich werden in allen drei Aspekten auch entsprechende Roboter mit mindestens einem Gelenk gemäß des jeweiligen Aspekts offenbart. Die Roboter können beispielsweise anthropomorphe Roboter (wie etwa Humanoide), Industrieroboter oder Leichtbauroboter sein.

Nachfolgend wird der Gegenstand dieser Offenbarung anhand einiger beispielhafter Ausführungsformen in Verbindung mit der Zeichnung näher erläutert. Die Zeichnung zeigt in
- Fig. 1a: eine Roboterhand gemäß einer beispielhaften Ausführungsform;
- Fig. 1b: eine Roboterhand gemäß einer weiteren beispielhaften Ausführungsform;
- Fig. 2: eine Explosionszeichnung eines Fingergelenks gemäß einer beispielhaften Ausführungsform;
- Fig. 3a: ein Verbindungselement gemäß einer beispielhaften Ausführungsform;
- Fig. 3b: ein Verbindungselement gemäß einer weiteren beispielhaften Ausführungsform;
- Fig. 4: ein Fingergelenk gemäß einer beispielhaften Ausführungsform mit einem Verbindungselement und einem Abdeckelement;
- Fig. 5: einen Antrieb eines Fingergelenks gemäß einer beispielhaften Ausführungsform; und
- Fig. 6: einen Roboterfinger gemäß einer beispielhaften Ausführungsform.

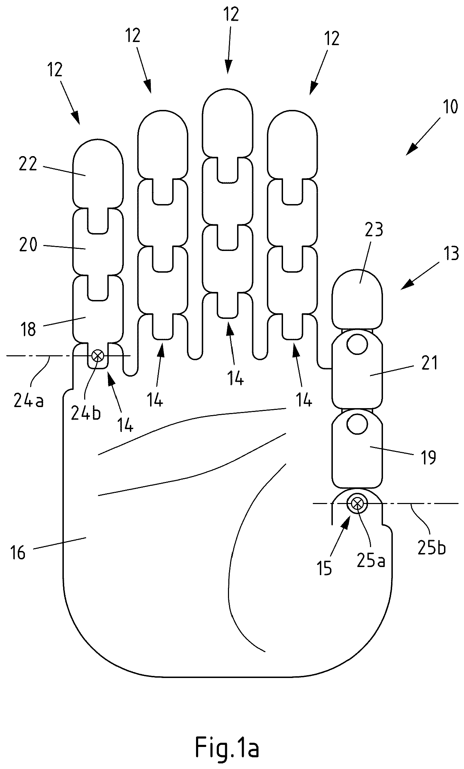

In den nachfolgenden Figuren 1a bis 6 wird der Gegenstand dieser Offenbarung beispielhaft anhand eines Fingergelenks eines Roboterfingers sowie anhand einer entsprechenden Roboterhand erläutert. Dies ist jedoch nicht einschränkend zu verstehen, und grundsätzlich kann es sich bei dem Gelenk gemäß dieser Offenbarung um ein beliebiges zweiachsiges Gelenk eines Roboters, welches als Kegelgetriebe ausgeführt ist, handeln.

Fig. 1a zeigt eine perspektivische Ansicht einer Roboterhand 10, welche mehrere Roboterfinger 12, 13 aufweist. Einer der Roboterfinger 12, 13 ist ein Daumen 13. Jeder Roboterfinger 12, 13 ist über ein Fingergelenk 14, 15 mit einem Grundkörper 16 verbunden. Die Fingergelenke 14 können deshalb auch aus Fingergrundgelenke 14 bezeichnet werden und das Fingergelenk 15 kann als Daumengrundgelenk 15 bezeichnet werden. Die Roboterfinger 12 haben jeweils mehrere Fingerglieder 18, 20 und 22, die gelenkig miteinander verbunden sind. Der Daumen 13 hat ebenso mehrere Daumenglieder 19, 21 und 23, die gelenkig miteinander verbunden sind.

Bei den Roboterfingern 12 ist das proximale Fingerglied 18 jeweils über das Fingergrundgelenk 14 schwenkbar an dem Grundkörper 16 gelagert. Das Fingergrundgelenk 14 ist jeweils um zwei im Wesentlichen zueinander senkrechte Achsen 24a, 24b drehbar, wobei eine erste Achse eine Beugeachse 24a und eine zweite Achse eine Spreizachse 24b ist, wie nachfolgend noch gezeigt werden wird. Ferner ist bei dem Daumen 13 das proximale Daumenglied 19 über das Daumengrundgelenk 15 schwenkbar and dem Grundkörper 16 gelagert. Das Daumengrundgelenk 15 ist ebenfalls um zwei im Wesentlichen zueinander senkrechte Achsen 25a, 25b drehbar, wobei eine erste Achse eine Beugeachse 25a und eine zweite Achse eine Spreizachse 25b ist, wie nachfolgend noch gezeigt werden wird. In diesem nicht einschränkenden Ausführungsbeispiel ist bei den Fingergrundgelenken 14 die Spreizachse 24b senkrecht zur Zeichenebene ausgerichtet, während bei dem Daumengrundgelenk 15 die Beugeachse 25a senkrecht zur Zeichenebene ausgerichtet ist. In anderen Ausführungsbeispielen kann die Ausrichtung der Achsen 24a, 24b, 25a, 25b auch anders sein als in Fig. 1a dargestellt.

Die in Fig. 1a gezeigte Roboterhand 10 ist eine anthropomorphe Roboterhand 10, deren Aufbau und Funktionsweise an eine menschliche Hand angelehnt ist. Die Fingergrundgelenke 14 können daher auch als MCP-Gelenke angesehen werden. Das Daumengrundgelenk 15 kann als MCP-Gelenk oder auch als CMC-Gelenk (Carpometacarpal-Gelenk) angesehen werden, je nachdem, wie die Analogie zur Anatomie der menschlichen Hand gezogen wird.

In dem nicht einschränkenden Ausführungsbeispiel von Fig. 1a weist der Daumen 13 der Roboterhand 10 insgesamt drei Daumenglieder 19, 21 und 23 auf. Dabei können Parallelen zwischen dem proximalen Daumenglied 19 und dem Mittelhandknochen (Os metacarpale primum) des menschlichen Daumens gezogen werden, da der Mittelhandknochen im Falle des menschlichen Daumens eine erhöhte Beweglichkeit aufweist. Fernen können Parallelen zwischen dem mittleren Daumenglied 21 und dem proximalen Fingerglied (Phalanx proximalis) des menschlichen Daumens sowie zwischen dem distalen Daumenglied 23 und dem distalen Fingerglied (Phalanx distalis) des menschlichen Daumens gezogen werden. Bei einer solchen Zuordnung entspricht das Daumengrundgelenk 15 der Roboterhand 10 dem CMC-Gelenk des menschlichen Daumens und das Gelenk, das das proximale Daumenglied 19 und das mittlere Daumenglied 21 beweglich verbindet, entspricht dem MCP-Gelenk des menschlichen Daumens.

Bei einer anderen Art der Zuordnung kann die erhöhte Beweglichkeit des menschlichen Daumens jedoch auch vernachlässigt werden, und das Daumengrundgelenk 15 der Roboterhand 10 kann als Entsprechung zum MCP-Gelenk des menschlichen Daumens angesehen werden. Dabei können Parallelen zwischen dem proximalen Daumenglied 19 und dem proximalen Fingerglied (Phalanx proximalis) des menschlichen Daumens sowie zwischen dem distalen Daumenglied 23 und dem distalen Fingerglied (Phalanx distalis) des menschlichen Daumens gezogen werden. Das mittlere Daumenglied 21 der Roboterhand 10 hat in diesem Fall keine menschliche Entsprechung, da der menschliche Daumen nur zwei Glieder aufweist.

In anderen Ausführungsformen einer Roboterhand 10 kann das mittlere Daumenglied 21 deshalb auch entfallen, und die Roboterhand 10 kann dementsprechend lediglich das proximale Daumenglied 19 sowie das distale Daumenglied 23 aufweisen. Hierbei entspricht das Daumengrundgelenk 15 der Roboterhand 10 wiederum dem MCP-Gelenk des menschlichen Daumens.

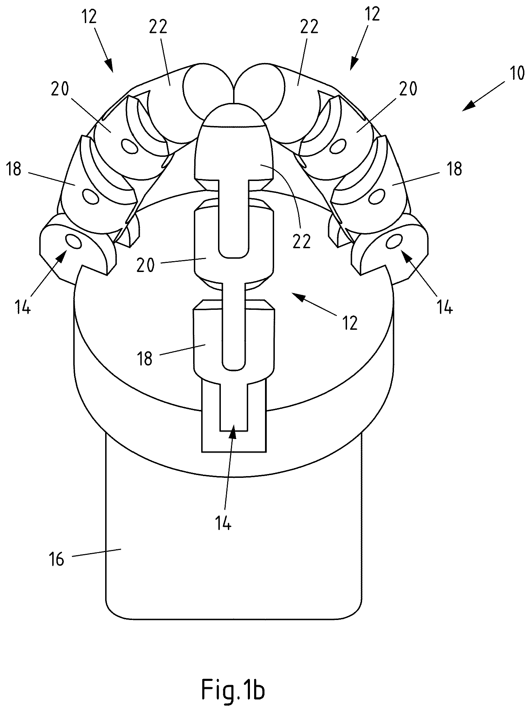

Fig. 1b zeigt eine weitere Ausführungsform einer Roboterhand 10 in Form eines Greifers 10 mit drei Fingern 12. Die Finger 12 sind an einem zentralen Grundkörper 16 gelenkig angeordnet. Jeder Finger weist ein erstes Fingerglied 18, ein zweites Fingerglied 20 und ein drittes Fingerglied 22 auf. Das erste Fingerglied 18 ist jeweils mit dem zweiten Fingerglied 20 gelenkig verbunden, und das zweite Fingerglied 20 ist jeweils mit dem dritten Fingerglied 22 gelenkig verbunden. Ferner ist das erste Fingerglied 18 jeweils über das Fingergrundgelenk 14 gelenkig mit dem Grundkörper 16 verbunden.

Eine Roboterhand 10, wie in Fig. 1a und Fig. 1b beispielhaft gezeigt, eignet sich besonders für kollaborative Robotik und Manipulationsaufgaben, z. B. im Bereich der Laborautomatisierung, Medizin oder Montage von Kleinteilen.

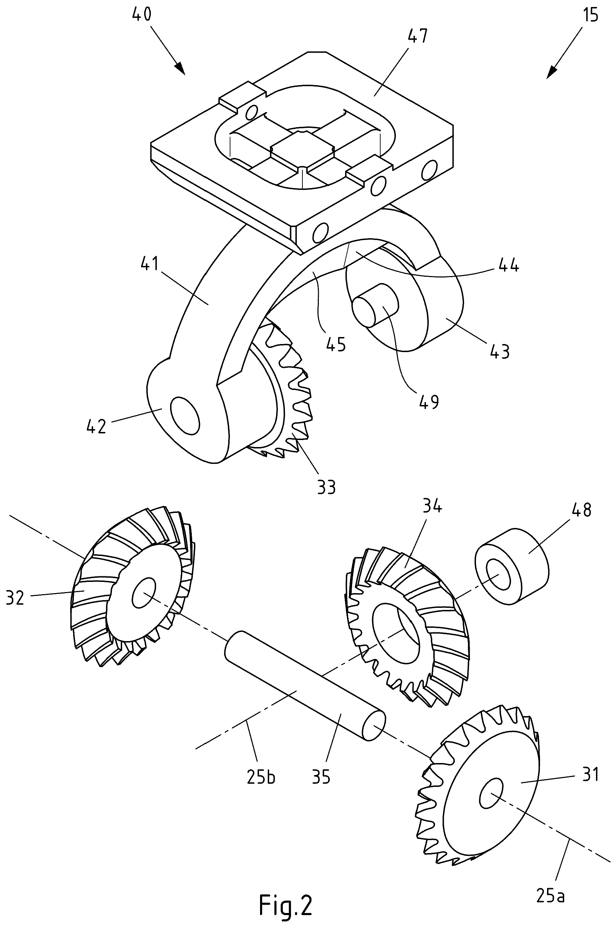

Fig. 2 zeigt eine Explosionszeichnung eines Fingergelenks 15. Bei dem Fingergelenk 15 handelt es sich exemplarisch um das in Fig. 1a gezeigte Daumengrundgelenk 15 des Daumens 13. Dies ist jedoch nicht einschränkend zu verstehen und sowohl die in Fig. 1a gezeigten Fingergrundgelenke 14 der übrigen Finger 12, als auch die Gelenke zwischen den Daumengliedern 19, 21 und 23 des Daumens 13 sowie die Gelenke zwischen den Fingergliedern 18, 20 und 22 der übrigen Finger 12, können genauso ausgestaltet sein. Ferner können auch die in Fig. 1b gezeigten Fingergrundgelenke 14 genauso ausgestaltet sein wie in Fig. 2 gezeigt.

Wie in Fig. 2 zu erkennen ist, ist das Fingergelenk 15 als Kegelgetriebe ausgebildet. Das Kegelgetriebe umfasst zunächst ein erstes Kegelrad 31 und ein zweites Kegelrad 32. Die beiden Kegelräder 31, 32 sind gegenüberliegend angeordnet und drehbar auf einem Achselement 35 gelagert, sodass sie sich um die Beugeachse 25a drehen können. Außerdem umfasst das Kegelgetriebe ein drittes Kegelrad 33 und ein viertes Kegelrad 34. Die beiden Kegelräder 33, 34 sind ebenfalls gegenüberliegend angeordnet. Sie greifen jeweils in die Kegelräder 31, 32 ein und sind um die Spreizachse 25b drehbar gelagert.

In Fig. 2 ist außerdem ein bogenförmiges Verbindungselement 40 zu sehen, welches einen Bügelabschnitt 41 und einen Basisabschnitt 47 aufweist. Der Bügelabschnitt 41 ist durch das Verstärkungselement 44 mechanisch verstärkt. Ein erstes Ende 42 des Bügelabschnitts 41 ist fest mit dem dritten Kegelrad 33 verbunden. Ein zweites Ende 43 des Bügelabschnitts 41 weist einen Achsfortsatz 49 auf. An diesem Achsfortsatz 49 ist ein Lager 48 drehbar gelagert. An dem Lager 48 wiederum ist das vierte Kegelrad 34 drehbar gelagert. Das vierte Kegelrad 34 ist somit auch drehbar gegenüber dem Verbindungselement 40 gelagert.

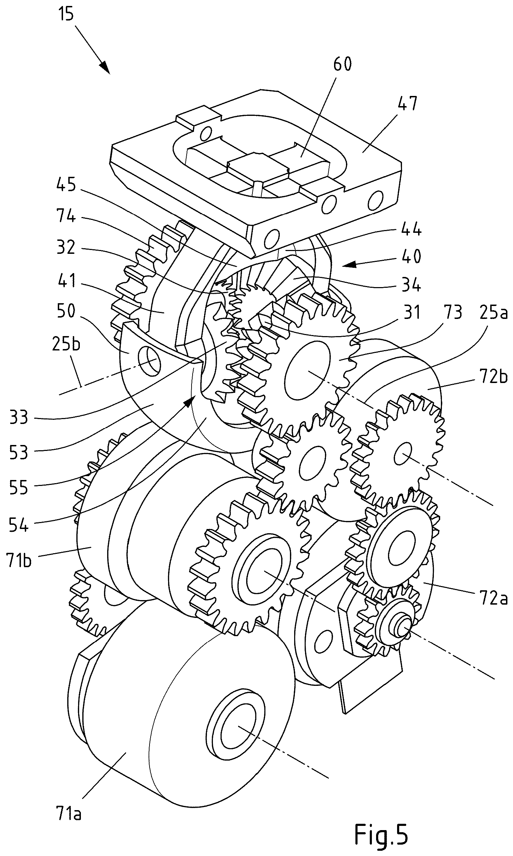

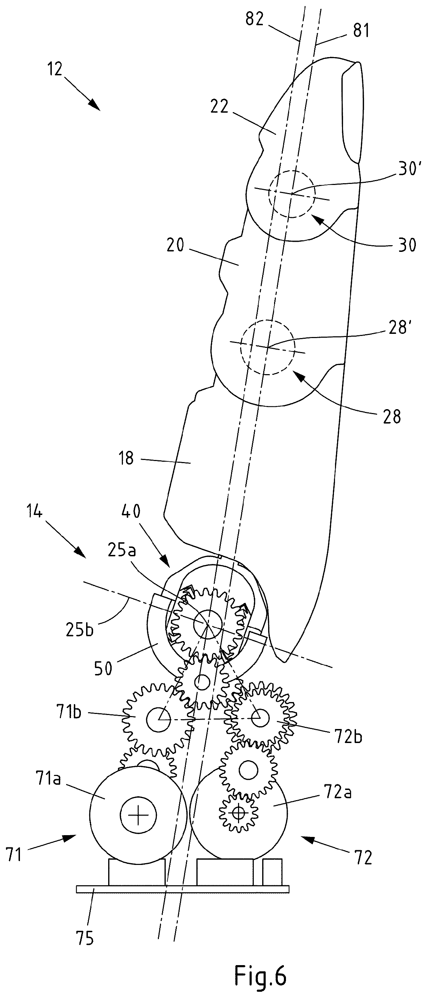

Wenn nun die Kegelräder 31, 32 gleichsinnig angetrieben werden, beispielsweise mittels eines Antriebs wie in Fig. 5 und 6 gezeigt, so wirken auf das dritte Kegelrad 33 zwei gleich große, aber entgegengesetzte Drehmomente. Das dritte Kegelrad 33 wird somit blockiert und aufgrund der auf die Kegelräder 31, 32 wirkenden Antriebsdrehmomente wird die gesamte Anordnung um die Beugeachse 25a gedreht, sodass eine Beugebewegung ausgeführt wird.

Wenn die Kegelräder 31, 32 hingegen gegenläufig angetrieben werden, treiben sie das dritte Kegelrad 33 und das vierte Kegelrad 34 an, die sich folglich ebenfalls gegenläufig drehen. Nachdem das Verbindungselement 40 mit dem dritten Kegelrad 33 fest verbunden, jedoch gegenüber dem vierten Kegelrad 34 drehbar gelagert ist, folgt das Verbindungselement 40 der Bewegung des dritten Kegelrads 33, sodass auf diese Weise eine Spreizbewegung um die Spreizachse 25b ausgeführt wird.

In Fig. 2 ist außerdem zu sehen, dass das Verstärkungselement 44 eine erste Aussparung 45 aufweist, die anhand der nachfolgenden Figuren noch näher erläutert wird.

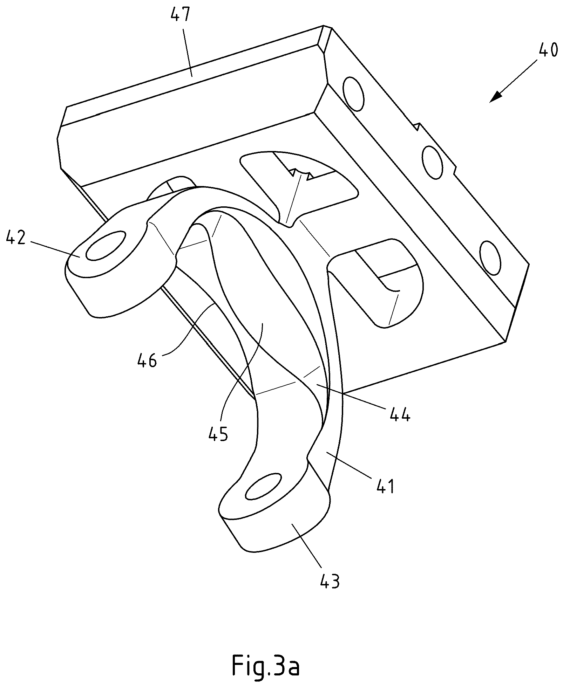

Fig. 3a zeigt eine perspektivische Ansicht des Verbindungselements 40 aus Fig. 2. Aus Gründen der besseren Übersichtlichkeit ist das mit dem ersten Ende 42 fest verbundene dritte Kegelrad 33 in Fig. 3a nicht gezeigt. Wie in Fig. 3a zu sehen ist, befindet sich am Verstärkungselement 44 des Bügelabschnitts 41 eine erste Aussparung 45. Eine formgleiche zweite Aussparung 46 befindet sich auf der gegenüberliegenden Seite des Verstärkungselements 44. Die konvexe, taschenförmige erste Aussparung 45 ist an die Form des ersten Kegelrads 31 angepasst, sodass ein Raum für das erste Kegelrad 31 entsteht. Analog dazu ist die konvexe, taschenförmige zweite Aussparung 46 an die Form des zweiten Kegelrads 32 angepasst, sodass ein Raum für das zweite Kegelrad 32 entsteht. Beim Ausführen einer Spreizbewegung, wenn also das Verbindungselement 40 sich um die Spreizachse 25b dreht, können somit größere Spreizwinkel realisiert werden, bis die Kegelräder 31, 32 am Verstärkungselement 44 anstoßen. Da der Aufbau des Kegelgetriebes in diesem Beispiel symmetrisch bezüglich einer Ebene senkrecht zur Beugeachse 25a ist, und somit die beiden Kegelräder 31, 32 jeweils die gleiche Form aufweisen, entsprechen sich auch die Formen der beiden Aussparungen 45, 46. Dies ist jedoch als nicht einschränkendes Beispiel zu verstehen und in anderen Ausführungsbeispielen kann auch ein unsymmetrischer Aufbau bezüglich einer Ebene senkrecht zur Beugeachse 25a vorliegen.

In dem in Fig. 3a dargestellten Ausführungsbeispiel sind die erste Aussparung 45 und die zweite Aussparung 46 kegelstumpfförmig ausgebildet und ihre Form entspricht jeweils einem Abzugskörper der Kegelräder 31, 32. Mit anderen Worten sind die beiden Aussparungen 45, 46 jeweils komplementär zu einem Ausschnitt derjenigen Kegelstümpfe, die durch die Form der Kegelräder 31, 32 definiert werden und die Kegelräder 31, 32 einhüllen. Auf diese Weise sind die beiden Aussparungen 45, 46 dazu eingerichtet, jeweils einen Teil der Kegelräder 31, 32 passgenau aufzunehmen, wodurch eine bessere Raumausnutzung und somit größere maximale Spreizwinkel von +/- 35° oder mehr erreicht werden können. Bei der passgenauen Aufnahme der Kegelräder 31, 32 durch die beiden Aussparungen 45, 46 verbleibt ein Spalt mit einer konstanten Dicke, der als Spielpassung dient, um Kollisionen zu vermeiden.

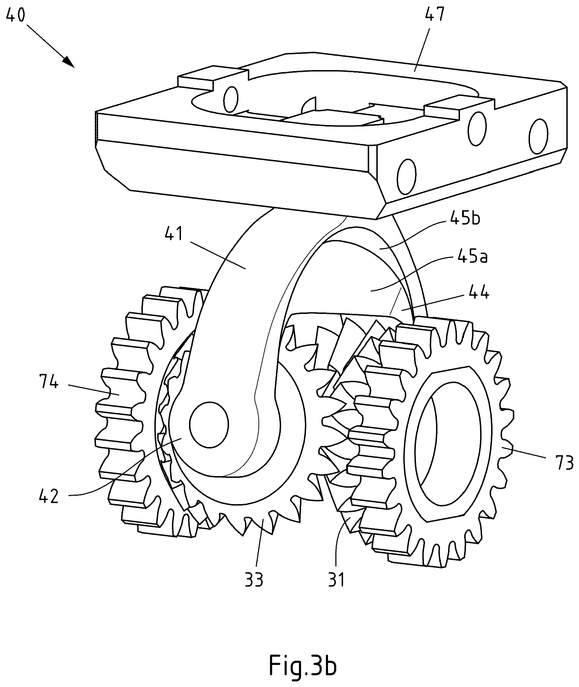

In Fig. 3b ist ein alternatives Ausführungsbeispiel eines Verbindungselements 40 gezeigt. Um den Unterschied zu dem Verbindungselement aus Fig. 3a besser aufzeigen zu können, sind in Fig. 3b auch Teile des Kegelgetriebes gezeigt, nämlich das erste Kegelrad 31 und das dritte Kegelrad 33. Ferner ist ein erstes Stirnzahnrad 73 eines ersten Antriebsmechanismus sowie ein zweites Stirnzahnrad 74 eines zweiten Antriebsmechanismus gezeigt, auf die später im Zusammenhang mit Fig. 5 noch näher eingegangen wird. Auch das in Fig. 3b dargestellte Verbindungselement 40 weist einen Bügelabschnitt 41 sowie einen Basisabschnitt 47 auf. Der Bügelabschnitt 41 weist ein erstes Ende 42 und ein zweites Ende (nicht dargestellt) auf und ist durch das Verstärkungselement 44 mechanisch verstärkt. Das Verstärkungselement 44 weist eine erste Aussparung 45 auf, die sich in einen ersten Bereich 45a und einen zweiten Bereich 45b unterteilen lässt, wie in Fig. 3b dargestellt. Wenn das Verbindungselement 40 eine Spreizbewegung in Richtung des ersten Kegelrads 31 ausführt, wird das erste Kegelrad 31 von dem ersten Bereich 45a der ersten Aussparung 45 aufgenommen, und das erste Stirnzahnrad 73 wird von dem zweiten Bereich 45b der ersten Aussparung 45 aufgenommen. Da das erste Kegelrad die Grundform eines Kegelstumpfs hat, bildet der erste Bereich 45a einen korrespondierenden Teil einer Kegeloberfläche. Demgegenüber weist das erste Stirnzahnrad 73 eine zylindrische Grundform auf, sodass der zweite Bereich 45b einen korrespondierenden Teil einer Zylinderoberfläche bildet. Auf diese Weise werden das erste Kegelrad und das erste Stirnzahnrad 73 jeweils passgenau in dem ersten Bereich 45a beziehungsweise in dem zweiten Bereich 45b der ersten Aussparung 45 aufgenommen. Auch hierbei verbleibt ein Spalt mit einer konstanten Dicke als Spielpassung.

Ferner weist das Verstärkungselement 44 auf der Rückseite eine zweite Aussparung mit einem ersten und einem zweiten Bereich auf, was jedoch in der Darstellung von Fig. 3b nicht zu sehen ist. Analog zu der ersten Aussparung 45 auf der Vorderseite ist der erste Bereich (nicht dargestellt) der zweiten Aussparung auf der Rückseite dazu eingerichtet, das zweite Kegelrad (nicht dargestellt) passgenau aufzunehmen, und der zweite Bereich (nicht dargestellt) der zweiten Aussparung auf der Rückseite ist dazu eingerichtet, das zweite Stirnzahnrad 74 passgenau aufzunehmen.

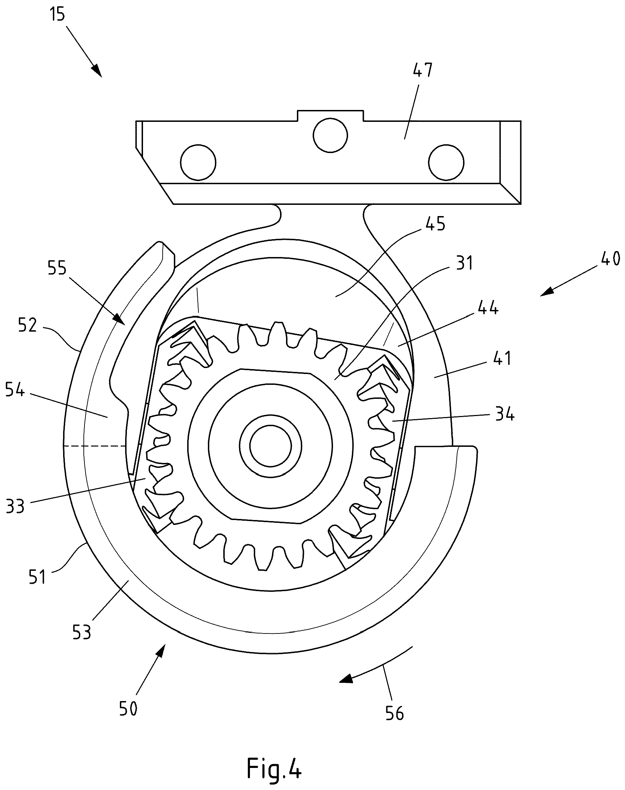

Fig. 4 zeigt eine schematische Darstellung eines Fingergelenks 15 mit einem Verbindungselement 40. Bei dem in Fig. 4 gezeigten Fingergelenk 15 handelt es sich exemplarisch um das in Fig. 1a gezeigte Daumengrundgelenk 15 des Daumens 13, was jedoch nicht einschränkend zu verstehen ist. Ferner handelt es sich bei dem Verbindungselement 40 um das in Fig. 3a gezeigte Verbindungselement 40. Dies ist jedoch ebenfalls nicht einschränkend zu verstehen, und in alternativen Ausführungsbeispielen kann das in Fig. 4 gezeigte Fingergelenk 15 auch das Verbindungselement 40 aus Fig. 3b aufweisen. Auch das in Fig. 4 gezeigte Fingergelenk 15 ist als Kegelgetriebe ausgebildet, wie im Zusammenhang mit Fig. 2 erläutert. Das Verbindungselement 40 ist nun wieder zusammen mit dem fest verbundenen dritten Kegelrad 33 gezeigt. Außerdem sind das erste Kegelrad 31 und das vierte Kegelrad 34 zu sehen. Das zweite Kegelrad 32 wird in dieser Ansicht verdeckt und ist deshalb nicht zu sehen.

Neben den bisher beschriebenen Komponenten umfasst das in Fig. 4 gezeigte Fingergelenk 15 ein Abdeckelement 50, um das Eindringen von Schmutz in das Kegelgetriebe zu verringern. Das Abdeckelement 50 setzt sich aus einem Bogenabschnitt 53 und zwei seitlichen Blendenabschnitten, von denen nur der vordere Blendenabschnitt 54 zu sehen ist, zusammen. Das gebogene Abdeckelement 50 weist entlang der Umfangsrichtung 56 einen variablen Krümmungsradius auf. Konkret umfasst das Abdeckelement einen ersten Bereich 51 mit einem Krümmungsradius von 10 mm und einen zweiten Bereich 52 mit einem Krümmungsradius von 13 mm. Die Grenze zwischen den beiden Bereichen 51, 52 ist in Fig. 4 durch die gestrichelte Linie angedeutet. Aufgrund des variablen Krümmungsradius des Abdeckelements 50 wird eine bessere Raumausnutzung erreicht, sodass der Spreizwinkel größere Werte annehmen kann.

Ferner ist in Fig. 4 zu sehen, dass die Blendenabschnitte 54 jeweils eine Auskerbung 55 aufweisen. Beim Ausführen einer Spreizbewegung kann sich der Bügelabschnitt 41 des Verbindungselements 40 somit am jeweiligen Blendenabschnitt 54 vorbeibewegen, ohne am Blendenabschnitt 54 anzustoßen. Folglich können durch die Auskerbungen 55 ebenfalls größere Spreizwinkel erreicht werden. Die Blendenabschnitte 54 weisen nur an einem Ende eine Auskerbung 55 auf, da der gesamte Aufbau in diesem Beispiel nicht symmetrisch bezüglich einer Ebene, die vertikal ausgerichtet ist und senkrecht zur Zeichenebene verläuft, ist, wie nachfolgend noch anhand von Fig. 6 erläutert wird. In anderen Ausführungsformen können das Verbindungselement 40 und das Abdeckelement 50 jedoch auch symmetrisch bezüglich der genannten Ebene ausgebildet sein und das Abdeckelement kann an beiden Enden der Blendenabschnitte 54 jeweils eine Auskerbung 55 aufweisen.

Fig. 5 zeigt eine perspektivische Ansicht eines Antriebs des Fingergelenks 15 aus Fig. 4. Das Fingergelenk 15 wird, wie zu erkennen ist, von zwei Antrieben 71, 72 angetrieben. Die Antriebe 71, 72 umfassen jeweils einen Motor 71a, 72a sowie ein Getriebe 71b, 72b. Der Motor 71a ist über das zugehörige Getriebe 71b und über das erste Stirnzahnrad 73 mit dem ersten Kegelrad 31 mechanisch gekoppelt. Das erste Stirnzahnrad 73 und das erste Kegelrad 31 sind hierzu fest miteinander verbunden. Außerdem ist der Motor 72a über das zugehörige Getriebe 72b und über das zweite Stirnzahnrad 74 mit dem zweiten Kegelrad 32 mechanisch gekoppelt. Das zweite Stirnzahnrad 74 und das zweite Kegelrad 32 sind hierzu ebenfalls fest miteinander verbunden. Das erste Stirnzahnrad 73 stellt somit ein erstes Antriebsübertragungselement im Sinne dieser Offenbarung dar und das zweite Stirnzahnrad 74 stellt ein zweites Antriebsübertragungselement dar. Anstelle von Zahnrädern, wie in Fig. 5 dargestellt, können für die mechanische Kopplung, d.h. für die Übertragung der Bewegung der Motoren 71a, 72a auf die Getriebe 71b, 72b und/oder für die Übertragung der Bewegung der Getriebe 71b, 72b auf die Kegelräder 31, 32, auch Riemenantriebe zum Einsatz kommen.

Außerdem ist in Fig. 5 zu sehen, wie das Verbindungselement 40 das dritte Kegelrad 33 und das vierte Kegelrad 34 umgreift, und wie außerdem das Abdeckelement 50 sowohl das dritte Kegelrad 33 und das vierte Kegelrad 34 als auch die beiden Enden des Verbindungselements 40 umgreift.

Wenn das erste Kegelrad 31 und das zweite Kegelrad 32 von den beiden Antrieben 71, 72 gegenläufig angetrieben werden, so führt das Fingergelenk 15 eine Spreizbewegung aus, wie im Zusammenhang mit Fig. 2 erläutert. Dabei kippt das Verbindungselement 40 um die Spreizachse 25b. Aufgrund der Aussparungen des Verbindungselements 40, dem variablen Krümmungsradius des Abdeckelements 50 und den Auskerbungen 55 der Blendenabschnitte 54 können bei einer solchen Spreizbewegung besonders große Spreizwinkel realisiert werden, bevor das erste Kegelrad 31 oder das zweite Kegelrad 32 am Verbindungselement 40 anstößt.

Von den Aussparungen des Verbindungselements 40 ist in Fig. 5 nur die erste Aussparung 45 auf der Vorderseite gezeigt, jedoch befindet sich eine zweite identische Aussparung auf der Rückseite. Das Fingergelenk 15 in Fig. 5 ist dabei so ausgestaltet, dass die beiden Stirnzahnräder 73, 74 beim Ausführen einer Spreizbewegung nicht an dem Verbindungselement 40 anstoßen. Dementsprechend ist die Form der Aussparung 45 sowie die Form der nicht gezeigten Aussparung auf der Rückseite lediglich an die Form der Kegelräder 31, 32 angepasst, sodass die Kegelräder 31, 32 jeweils passgenau aufgenommen werden. In alternativen Ausführungsformen kann das Fingergelenk 15 jedoch auch so ausgestaltet sein, dass die beiden Stirnzahnräder 73, 74 beim Ausführen einer Spreizbewegung an dem Verbindungselement 40 anstoßen würden. In diesem Fall kann die Aussparung 45 einen ersten Bereich und einen zweiten Bereich aufweisen, wobei der erste Bereich das erste Kegelrad 31 und der zweite Bereich das Stirnzahnrad 73 aufnimmt, wie im Zusammenhang mit Fig. 3b erläutert. Analog dazu kann die nicht gezeigte Aussparung auf der Rückseite ebenfalls einen ersten Bereich und einen zweiten Bereich aufweisen.

In weiteren alternativen Ausführungsformen, die nicht in den Figuren gezeigt sind, kann das Fingergelenk 15 auch so ausgestaltet sein, dass zwar die beiden Stirnzahnräder 73, 74 beim Ausführen einer Spreizbewegung an dem Verbindungselement 40 anstoßen würden, nicht jedoch die beiden Kegelräder 31, 32. In diesem Fall kann die Form der Aussparung 45 sowie die Form der nicht gezeigten Aussparung auf der Rückseite lediglich an die Form der Stirnzahnräder 73, 74 angepasst sein, sodass die Stirnzahnräder 73, 74 jeweils passgenau aufgenommen werden.

Auf der dem proximalen Fingerglied 19 zugewandten Seite kann ein Messensor 60 wie etwa ein 2D-Sensor angeordnet sein. Der Messensor 60 ist dem proximalen Fingerglied 19 zugewandt und kann in den Basisabschnitt 47 integriert werden.

Fig. 6 zeigt eine Seitenansicht eines Roboterfingers 12. Bei dem Roboterfinger 12 kann es sich insbesondere um den in Fig. 1a gezeigten Daumen 13 handeln. Dies ist jedoch nicht einschränkend zu verstehen und die in Fig. 1a gezeigten übrigen Finger 12 können genauso ausgestaltet sein. Neben den in Fig. 5 bereits gezeigten Elementen der Antriebe 71, 72 ist in Fig. 6 zusätzlich eine Steuerplatine 75 zu sehen, welche eine Steuerschaltung für die Antriebe 71, 72 enthält. Außerdem ist in Fig. 6 zu erkennen, dass sich der Roboterfinger 12 ausgehend von dem Fingergrundgelenk 14 über ein Fingermittelgelenk 28 und ein Fingerendgelenk 30 erstreckt. An das Fingergrundgelenk 14 schließt sich das proximale Fingerglied 18 an. Das proximale Fingerglied 18 ist über das Fingermittelgelenk 28 mit dem mittleren Fingerglied 20 schwenkbar verbunden. Das mittlere Fingerglied 20 ist über das Fingerendgelenk 30 mit dem distalen Fingerglied 22 schwenkbar verbunden.

In Fig. 6 ist exemplarisch eine Ausführungsform eines Roboterfingers 12 gezeigt, bei der sich eine Längsachse 81 durch die Drehachsen 28', 30' der Fingergelenke 28, 30 erstreckt, und bei der sich parallel zu der Längsachse 81 ein Zenit 82 erstreckt. Der Zenit 82 verläuft durch die Beugeachse 25a des Fingergrundgelenks 14 und ist gegenüber der Längsachse 81 in palmarer Richtung verschoben. Diese Verschiebung führt zu einem vergrößerten maximalen Beugewinkel des Fingers 12 in palmarer Richtung. Gleichzeitig sind die Antriebe 71, 72 und das Fingergrundgelenk 14 nicht exakt senkrecht, sondern geneigt ausgerichtet. Diese geneigte Ausrichtung, bei der die Längsachse 81 und der Zenit 82 nicht exakt vertikal verlaufen, hat wiederum zur Folge, dass der Verbindungsbogen 40 und das Abdeckelement 50 bezüglich einer Ebene, die vertikal ausgerichtet ist und senkrecht zur Zeichenebene verläuft, nicht symmetrisch ist. Die genannte Verschiebung sowie die Neigung und die damit verbundene Asymmetrie ist jedoch rein beispielhaft und in keiner Weise einschränkend zu verstehen. In anderen Ausführungsformen gemäß dieser Offenbarung können die Beugeachse 25a sowie die Drehachsen 28', 30' auch auf einer einzigen, exakt vertikal verlaufenden Geraden liegen. Die Antriebe 71, 72 und das Fingergrundgelenk 14 können dann senkrecht ausgerichtet sein und der Aufbau des Verbindungsbogens 40 sowie des Abdeckelements 50 kann symmetrisch zu einer vertikal verlaufenden und senkrecht zur Zeichenebene ausgerichteten Ebene sein.

In den beispielhaften Ausführungsformen, die in den Figuren 1a bis 6 dargestellt sind, ist das Kegelgetriebe so angeordnet, dass die zweite Achse, um die das dritte und vierte Kegelrad jeweils drehbar gelagert ist, mit der Spreizachse des Fingergelenks zusammenfällt, wobei die Spreizachse durch die Anordnung der Roboterfinger untereinander und relativ zum Grundkörper der Roboterhand definiert wird. Dementsprechend ist der Verbindungsbogen, der das dritte und vierte Kegelrad umschließt, in Richtung der Spreizachse des Fingergelenks ausgerichtet. Dies ist jedoch rein exemplarisch zu verstehen und in anderen Ausführungsformen eines Gelenks gemäß dieser Offenbarung kann die Anordnung des Kegelgetriebes auch, beispielsweise um 90°, gedreht sein. Mit anderen Worten kann das Kegelgetriebe in anderen Ausführungsformen auch so angeordnet sein, dass die zweite Achse mit einer Beugeachse des Gelenks zusammenfällt. Dementsprechend kann dann auch der Verbindungsbogen in Richtung der Beugeachse ausgerichtet sein. Dies kann insbesondere dann der Fall sein, wenn das Gelenk ein Handgelenk eines Roboters ist.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsformen werden ebenfalls offenbart:
Ausführungsform 1: Gelenk für einen Roboter, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist, wobei das Verbindungselement eine erste Aussparung aufweist, welche dazu eingerichtet ist, zumindest einen Teil des ersten Kegelrads und/oder zumindest einen Teil eines ersten Antriebsübertragungselements des Gelenks aufzunehmen, wenn das Verbindungselement in Richtung des ersten Kegelrads um die zweite Achse gedreht wird, wobei eine Form der ersten Aussparung an eine Form des ersten Kegelrads und/oder an eine Form des ersten Antriebsübertragungselements angepasst ist.
Ausführungsform 2: Gelenk gemäß Ausführungsform 1, wobei die erste Aussparung dazu eingerichtet ist, zumindest einen Teil des ersten Kegelrads und/oder zumindest einen Teil des ersten Antriebsübertragungselements passgenau aufzunehmen, wenn das Verbindungselement in Richtung des ersten Kegelrads um die zweite Achse gedreht wird.
Ausführungsform 3: Gelenk gemäß Ausführungsform 1 oder 2, wobei das Verbindungselement ferner eine zweite Aussparung aufweist, welche dazu eingerichtet ist, zumindest einen Teil des zweiten Kegelrads und/oder zumindest einen Teil eines zweiten Antriebsübertragungselements des Gelenks aufzunehmen, wenn das Verbindungselement in Richtung des zweiten Kegelrads um die zweite Achse gedreht wird, wobei eine Form der zweiten Aussparung an eine Form des zweiten Kegelrads und/oder an eine Form des zweiten Antriebsübertragungselements angepasst ist
Ausführungsform 4: Gelenk gemäß einer der Ausführungsformen 1 bis 3, wobei das Verbindungselement einen Bügelabschnitt und einen Basisabschnitt umfasst, wobei der Bügelabschnitt ein Verstärkungselement zur mechanischen Verstärkung des Bügelabschnitts aufweist, wobei das Verstärkungselement zumindest einen Teil der ersten Aussparung und/oder zumindest einen Teil der zweiten Aussparung aufweist.
Ausführungsform 5: Gelenk gemäß einer der Ausführungsformen 1 bis 4, wobei das Gelenk dazu eingerichtet ist, bei einer Drehung um die zweite Achse einen Drehwinkel von +/- 30° oder mehr, bevorzugt +/- 35° oder mehr, zu ermöglichen.
Ausführungsform 6: Gelenk gemäß einer der Ausführungsformen 1 bis 5, wobei das Gelenk ferner ein Abdeckelement umfasst, welches das dritte Kegelrad und das vierte Kegelrad zumindest teilweise umschließt.
Ausführungsform 7: Gelenk gemäß Ausführungsform 6, wobei das Abdeckelement das Verbindungselement zumindest teilweise umschließt.
Ausführungsform 8: Gelenk gemäß Ausführungsform 7, wobei das Abdeckelement entlang einer Umfangsrichtung einen variablen Krümmungsradius aufweist.
Ausführungsform 9: Gelenk gemäß Ausführungsform 8, wobei das Abdeckelement einen ersten Bereich mit einem ersten Krümmungsradius und einen zweiten Bereich mit einem zweiten Krümmungsradius, der sich vom ersten Krümmungsradius unterscheidet, aufweist.
Ausführungsform 10: Gelenk gemäß einer der Ausführungsformen 7 bis 9, wobei das Abdeckelement einen Bogenabschnitt und mindestens einen seitlich vom Bogenabschnitt angeordneten und mit dem Bogenabschnitt verbundenen Blendenabschnitt umfasst.
Ausführungsform 11: Gelenk gemäß Ausführungsform 10, wobei der mindestens eine Blendenabschnitt jeweils mindestens eine Auskerbung aufweist, welche dazu eingerichtet ist, eine Bewegung des Verbindungselements am jeweiligen Blendenabschnitt vorbei zumindest teilweise zu ermöglichen, wenn das Verbindungselement um die zweite Achse gedreht wird.
Ausführungsform 12: Gelenk gemäß einer der Ausführungsformen 1 bis 11, wobei das Gelenk ein Fingergelenk, insbesondere ein Fingergrundgelenk, oder ein Handgelenk ist.
Ausführungsform 13: Roboterfinger mit mindestens einem Gelenk gemäß einer der Ausführungsformen 1 bis 12.
Ausführungsform 14: Roboterfinger gemäß Ausführungsform 13, wobei der Roboterfinger ein Daumen ist.
Ausführungsform 15: Roboterhand mit mindestens einem Gelenk gemäß einer der Ausführungsformen 1 bis 12 und/oder mit mindestens einem Roboterfinger gemäß Ausführungsform 13 oder 14.
Ausführungsform 16: Roboter mit mindestens einem Gelenk gemäß einer der Ausführungsformen 1 bis 12.
Ausführungsform17: Gelenk für einen Roboter, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um die erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist, wobei das Gelenk ferner ein Abdeckelement umfasst, welches das dritte Kegelrad und das vierte Kegelrad zumindest teilweise umschließt, wobei das Abdeckelement das Verbindungselement zumindest teilweise umschließt, wobei das Abdeckelement entlang einer Umfangsrichtung einen variablen Krümmungsradius aufweist.
Ausführungsform 18: Gelenk gemäß Ausführungsform 17, wobei das Abdeckelement einen ersten Bereich mit einem ersten Krümmungsradius und einen zweiten Bereich mit einem zweiten Krümmungsradius, der sich vom ersten Krümmungsradius unterscheidet, aufweist.
Ausführungsform 19: Gelenk gemäß Ausführungsform 17 oder 18, wobei das Abdeckelement einen Bogenabschnitt und mindestens einen seitlich vom Bogenabschnitt angeordneten und mit dem Bogenabschnitt verbundenen Blendenabschnitt umfasst.
Ausführungsform 20: Gelenk gemäß Ausführungsform 19, wobei der mindestens eine Blendenabschnitt jeweils mindestens eine Auskerbung aufweist, welche dazu eingerichtet ist, eine Bewegung des Verbindungselements am jeweiligen Blendenabschnitt vorbei zumindest teilweise zu ermöglichen, wenn das Verbindungselement um die zweite Achse gedreht wird.
Ausführungsform 21: Gelenk gemäß einer der Ausführungsformen 17 bis 20, wobei das Verbindungselement eine erste Aussparung aufweist, welche dazu eingerichtet ist, zumindest einen Teil des ersten Kegelrads und/oder zumindest einen Teil eines ersten Antriebsübertragungselements des Gelenks aufzunehmen, wenn das Verbindungselement in Richtung des ersten Kegelrads um die zweite Achse gedreht wird, wobei eine Form der ersten Aussparung an eine Form des ersten Kegelrads und/oder an eine Form des ersten Antriebsübertragungselements angepasst ist.
Ausführungsform 22: Gelenk gemäß Ausführungsform 21, wobei die erste Aussparung dazu eingerichtet ist, zumindest einen Teil des ersten Kegelrads und/oder zumindest einen Teil des ersten Antriebsübertragungselements passgenau aufzunehmen, wenn das Verbindungselement in Richtung des ersten Kegelrads um die zweite Achse gedreht wird.
Ausführungsform 23: Gelenk gemäß Ausführungsform 21 oder 22, wobei das Verbindungselement ferner eine zweite Aussparung aufweist, welche dazu eingerichtet ist, zumindest einen Teil des zweiten Kegelrads und/oder zumindest einen Teil eines zweiten Antriebsübertragungselements des Gelenks aufzunehmen, wenn das Verbindungselement in Richtung des zweiten Kegelrads um die zweite Achse gedreht wird, wobei eine Form der zweiten Aussparung an eine Form des zweiten Kegelrads und/oder an eine Form des zweiten Antriebsübertragungselements angepasst ist.
Ausführungsform 24: Gelenk gemäß einer der Ausführungsformen 21 bis 23, wobei das Verbindungselement einen Bügelabschnitt und einen Basisabschnitt umfasst, wobei der Bügelabschnitt ein Verstärkungselement zur mechanischen Verstärkung des Bügelabschnitts aufweist, wobei das Verstärkungselement zumindest einen Teil der ersten Aussparung und/oder zumindest einen Teil der zweiten Aussparung aufweist.
Ausführungsform 25: Gelenk gemäß einer der Ausführungsformen 21 bis 22, wobei das Gelenk dazu eingerichtet ist, bei einer Drehung um die zweite Achse einen Drehwinkel von +/- 30° oder mehr, bevorzugt +/- 35° oder mehr, zu ermöglichen. Ausführungsform 26: Gelenk gemäß einer der Ausführungsformen 17 bis 25, wobei das Gelenk ein Fingergelenk, insbesondere ein Fingergrundgelenk, oder ein Handgelenk ist.
Ausführungsform 27: Roboterfinger mit mindestens einem Gelenk gemäß einer der Ausführungsformen 17 bis 26.
Ausführungsform 28: Roboterfinger gemäß Ausführungsform 27, wobei der Roboterfinger ein Daumen ist.
Ausführungsform 29: Roboterhand mit mindestens einem Gelenk gemäß einer der Ausführungsformen 17 bis 26 und/oder mit mindestens einem Roboterfinger gemäß Ausführungsform 27 oder 28.
Ausführungsform 30: Roboter mit mindestens einem Gelenk gemäß einer der Ausführungsformen 17 bis 26.
Ausführungsform 31: Gelenk für einen Roboter, wobei das Gelenk um eine erste Achse und um eine zweite Achse drehbar gelagert ist, wobei das Gelenk als Kegelgetriebe ausgebildet ist, welches ein erstes Kegelrad, ein zweites Kegelrad, ein drittes Kegelrad und ein viertes Kegelrad umfasst, wobei das erste Kegelrad und das zweite Kegelrad gegenüberliegend entlang der ersten Achse angeordnet und um die erste Achse drehbar gelagert sind, wobei das dritte Kegelrad und das vierte Kegelrad gegenüberliegend entlang der zweiten Achse angeordnet und um die zweite Achse drehbar gelagert sind, wobei das Gelenk ein Verbindungselement umfasst, welches das dritte Kegelrad und das vierte Kegelrad zumindest teilweise umschließt, wobei das Verbindungselement mit dem dritten Kegelrad fest verbunden und gegenüber dem vierten Kegelrad drehbar gelagert ist, wobei das Gelenk ferner ein Abdeckelement umfasst, welches das dritte Kegelrad und das vierte Kegelrad zumindest teilweise umschließt, wobei das Abdeckelement das Verbindungselement zumindest teilweise umschließt, wobei das Abdeckelement einen Bogenabschnitt und mindestens einen seitlich vom Bogenabschnitt angeordneten und mit dem Bogenabschnitt verbundenen Blendenabschnitt umfasst, wobei der mindestens eine Blendenabschnitt jeweils mindestens eine Auskerbung aufweist, welche dazu eingerichtet ist, eine Bewegung des Verbindungselements am jeweiligen Blendenabschnitt vorbei zumindest teilweise zu ermöglichen, wenn das Verbindungselement um die zweite Achse gedreht wird.
Ausführungsform 32: Gelenk gemäß Ausführungsform 31, wobei das Abdeckelement entlang einer Umfangsrichtung einen variablen Krümmungsradius aufweist.
Ausführungsform 33: Gelenk gemäß Ausführungsform 32, wobei das Abdeckelement einen ersten Bereich mit einem ersten Krümmungsradius und einen zweiten Bereich mit einem zweiten Krümmungsradius, der sich vom ersten Krümmungsradius unterscheidet, aufweist.
Ausführungsform 34: Gelenk gemäß einer der Ausführungsformen 31 bis 33, wobei das Verbindungselement eine erste Aussparung aufweist, welche dazu eingerichtet ist, zumindest einen Teil des ersten Kegelrads und/oder zumindest einen Teil eines ersten Antriebsübertragungselements des Gelenks aufzunehmen, wenn das Verbindungselement in Richtung des ersten Kegelrads um die zweite Achse gedreht wird, wobei eine Form der ersten Aussparung an eine Form des ersten Kegelrads und/oder an eine Form des ersten Antriebsübertragungselements angepasst ist.
Ausführungsform 35: Gelenk gemäß Ausführungsform 34, wobei die erste Aussparung dazu eingerichtet ist, zumindest einen Teil des ersten Kegelrads und/oder zumindest einen Teil des ersten Antriebsübertragungselements passgenau aufzunehmen, wenn das Verbindungselement in Richtung des ersten Kegelrads um die zweite Achse gedreht wird.
Ausführungsform 36: Gelenk gemäß Ausführungsform 34 oder 35, wobei das Verbindungselement ferner eine zweite Aussparung aufweist, welche dazu eingerichtet ist, zumindest einen Teil des zweiten Kegelrads und/oder zumindest einen Teil eines zweiten Antriebsübertragungselements des Gelenks aufzunehmen, wenn das Verbindungselement in Richtung des zweiten Kegelrads um die zweite Achse gedreht wird, wobei eine Form der zweiten Aussparung an eine Form des zweiten Kegelrads und/oder an eine Form des zweiten Antriebsübertragungselements angepasst ist.
Ausführungsform 37: Gelenk gemäß einer der Ausführungsformen 34 bis 36, wobei das Verbindungselement einen Bügelabschnitt und einen Basisabschnitt umfasst, wobei der Bügelabschnitt ein Verstärkungselement zur mechanischen Verstärkung des Bügelabschnitts aufweist, wobei das Verstärkungselement zumindest einen Teil der ersten Aussparung und/oder zumindest einen Teil der zweiten Aussparung aufweist.
Ausführungsform 38: Gelenk gemäß einer der Ausführungsformen 34 bis 37, wobei das Gelenk dazu eingerichtet ist, bei einer Drehung um die zweite Achse einen Drehwinkel von +/- 30° oder mehr, bevorzugt +/- 35° oder mehr, zu ermöglichen.
Ausführungsform 39: Gelenk gemäß einer der Ausführungsformen 31 bis 38, wobei das Gelenk ein Fingergelenk, insbesondere ein Fingergrundgelenk, oder ein Handgelenk ist.
Ausführungsform 40: Roboterfinger mit mindestens einem Gelenk gemäß einer der Ausführungsformen 31 bis 39.
Ausführungsform 41: Roboterfinger gemäß Ausführungsform 40, wobei der Roboterfinger ein Daumen ist.
Ausführungsform 42: Roboterhand mit mindestens einem Gelenk gemäß einer der Ausführungsformen 31 bis 39 und/oder mit mindestens einem Roboterfinger gemäß Ausführungsform 40 oder 41.
Ausführungsform 43: Roboter mit mindestens einem Gelenk gemäß einer der Ausführungsformen 31 bis 39.

## Patentansprüche

1. Gelenk (14, 15) für einen Roboter, wobei das Gelenk (14, 15) um eine erste Achse (24a, 25a) und um eine zweite Achse (24b, 25b) drehbar gelagert ist,
wobei das Gelenk (14, 15) als Kegelgetriebe ausgebildet ist, welches ein erstes Kegelrad (31), ein zweites Kegelrad (32), ein drittes Kegelrad (33) und ein viertes Kegelrad (34) umfasst, wobei das erste Kegelrad (31) und das zweite Kegelrad (32) gegenüberliegend entlang der ersten Achse (24a, 25a) angeordnet und um die erste Achse (24a, 25a) drehbar gelagert sind, wobei das dritte Kegelrad (33) und das vierte Kegelrad (34) gegenüberliegend entlang der zweiten Achse (24b, 25b) angeordnet und um die zweite Achse (24b, 25b) drehbar gelagert sind, wobei das Gelenk (14, 15) ein Verbindungselement (40) umfasst, welches das dritte Kegelrad (33) und das vierte Kegelrad (34) zumindest teilweise umschließt, wobei das Verbindungselement (40) mit dem dritten Kegelrad (33) fest verbunden und gegenüber dem vierten Kegelrad (34) drehbar gelagert ist, wobei das Verbindungselement (40) eine erste Aussparung (45) aufweist, welche dazu eingerichtet ist, zumindest einen Teil des ersten Kegelrads (31) und/oder zumindest einen Teil eines ersten Antriebsübertragungselements (73) des Gelenks (14, 15) aufzunehmen, wenn das Verbindungselement (40) in Richtung des ersten Kegelrads (31) um die zweite Achse (24b, 25b) gedreht wird, wobei eine Form der ersten Aussparung (45) an eine Form des ersten Kegelrads (31) und/oder an eine Form des ersten Antriebsübertragungselements (73) angepasst ist.

2. Gelenk nach Anspruch 1, wobei die erste Aussparung (45) dazu eingerichtet ist, zumindest einen Teil des ersten Kegelrads (31) und/oder zumindest einen Teil des ersten Antriebsübertragungselements (73) passgenau aufzunehmen, wenn das Verbindungselement (40) in Richtung des ersten Kegelrads (31) um die zweite Achse (24b, 25b) gedreht wird.

3. Gelenk nach Anspruch 1 oder 2, wobei das Verbindungselement (40) ferner eine zweite Aussparung (46) aufweist, welche dazu eingerichtet ist, zumindest einen Teil des zweiten Kegelrads (32) und/oder zumindest einen Teil eines zweiten Antriebsübertragungselements (74) des Gelenks (14, 15) aufzunehmen, wenn das Verbindungselement (40) in Richtung des zweiten Kegelrads (32) um die zweite Achse (24b, 25b) gedreht wird, wobei eine Form der zweiten Aussparung (46) an eine Form des zweiten Kegelrads (32) und/oder an eine Form des zweiten Antriebsübertragungselements (74) angepasst ist.

4. Gelenk nach einem der Ansprüche 1 bis 3, wobei das Verbindungselement (40) einen Bügelabschnitt (41) und einen Basisabschnitt (47) umfasst, wobei der Bügelabschnitt (41) ein Verstärkungselement (44) zur mechanischen Verstärkung des Bügelabschnitts (41) aufweist, wobei das Verstärkungselement (44) zumindest einen Teil der ersten Aussparung (45) und/oder zumindest einen Teil der zweiten Aussparung (46) aufweist.

5. Gelenk nach einem der Ansprüche 1 bis 4, wobei das Gelenk (14, 15) dazu eingerichtet ist, bei einer Drehung um die zweite Achse (24b, 25b) einen Drehwinkel von +/- 30° oder mehr, bevorzugt +/- 35° oder mehr, zu ermöglichen.

6. Gelenk nach einem der Ansprüche 1 bis 5, wobei das Gelenk (14, 15) ferner ein Abdeckelement (50) umfasst, welches das dritte Kegelrad (33) und das vierte Kegelrad (34) zumindest teilweise umschließt.

7. Gelenk nach Anspruch 6, wobei das Abdeckelement (50) das Verbindungselement (40) zumindest teilweise umschließt.

8. Gelenk nach Anspruch 7, wobei das Abdeckelement (50) entlang einer Umfangsrichtung (56) einen variablen Krümmungsradius aufweist.

9. Gelenk nach Anspruch 8, wobei das Abdeckelement (50) einen ersten Bereich (51) mit einem ersten Krümmungsradius und einen zweiten Bereich (52) mit einem zweiten Krümmungsradius, der sich vom ersten Krümmungsradius unterscheidet, aufweist.

10. Gelenk nach einem der Ansprüche 7 bis 9, wobei das Abdeckelement (50) einen Bogenabschnitt (53) und mindestens einen seitlich vom Bogenabschnitt (53) angeordneten und mit dem Bogenabschnitt (53) verbundenen Blendenabschnitt (54) umfasst.

11. Gelenk nach Anspruch 10, wobei der mindestens eine Blendenabschnitt (54) jeweils mindestens eine Auskerbung (55) aufweist, welche dazu eingerichtet ist, eine Bewegung des Verbindungselements (40) am jeweiligen Blendenabschnitt (54) vorbei zumindest teilweise zu ermöglichen, wenn das Verbindungselement (40) um die zweite Achse (24b, 25b) gedreht wird.

12. Gelenk nach einem der Ansprüche 1 bis 11, wobei das Gelenk (14, 15) ein Fingergelenk (14, 15), insbesondere ein Fingergrundgelenk (14, 15), oder ein Handgelenk ist.

13. Roboterfinger (12, 13) mit mindestens einem Gelenk (14, 15) nach einem der Ansprüche 1 bis 12.

14. Roboterfinger nach Anspruch 13, wobei der Roboterfinger ein Daumen (13) ist.

15. Roboterhand (10) mit mindestens einem Gelenk (14, 15) nach einem der Ansprüche 1 bis 12 und/oder mit mindestens einem Roboterfinger (12, 13) nach Anspruch 13 oder 14.

16. Roboter mit mindestens einem Gelenk (14, 15) nach einem der Ansprüche 1 bis 12.
